# EUROPÄISCHE PATENTANMELDUNG

(11) **EP 4 455 241 A1**
(43) Veröffentlichungstag der Anmeldung: **30.10.2024**
(21) Anmeldenummer: 24170174.7
(22) Anmeldetag: 15.04.2024
(51) Int. Cl.: C09J 7/38

(54) **CHEMIKALIENBESTÄNDIGES, REAKTIVES HAFTKLEBEBAND**

(30) Priorität: 28.04.2023 DE 102023111057
(71) Anmelder: TESA SE, 22848 Norderstedt (DE)
(72) Erfinder: SCHUH, Christian, Norderstedt (DE); LOSSADA, Francisco, Norderstedt (DE); STREBL-PFARR, Maike Christine, Norderstedt (DE); SCHAFA, Tahmina, Norderstedt (DE)
(74) Vertreter: tesa SE

(57) **Zusammenfassung**

Die Erfindung betrifft ein chemikalienbeständiges, reaktives Haftklebeband mit einer Reaktivklebemasse umfassend ein radikalisch polymerisierbares Monomer oder Oligomer, ein Initiatorsystem zur Aushärtung des mindestens einen radikalisch polymerisierbaren Monomers oder Oligomers, und ein Poly(meth)acrylat, welches einen Anteil von mindestens 15 Gewichtsprozent an Monomeren mit aromatischen Resten enthält.

## Beschreibung

Die Erfindung betrifft ein chemikalienbeständiges, reaktives Haftklebeband und die Verwendung entsprechender reaktiver Haftklebebänder zur Verklebung von zwei oder mehr Komponenten.

Das Fügen separater Elemente ist eines der zentralen Verfahren der Fertigungstechnik. Neben anderen Methoden, wie beispielsweise dem Schweißen und dem Löten, kommt dabei heutzutage insbesondere dem Kleben, d.h. dem Fügen unter Verwendung eines Klebstoffes, eine wichtige Bedeutung zu. Eine Alternative zur Verwendung formloser Klebstoffe, die beispielsweise aus einer Tube appliziert werden, stellen hierbei sogenannte Klebebänder dar. Aus dem Alltag sind insbesondere Haftklebebänder bekannt, bei denen eine Haftklebemasse für die Klebwirkung sorgt, die bei üblichen Umgebungsbedingungen dauerhaft klebrig sowie klebfähig ist. Entsprechende Haftklebebänder können durch Druck auf ein Substrat aufgebracht werden und bleiben dort haften, lassen sich später jedoch mehr oder weniger rückstandsfrei wieder entfernen.

Insbesondere für den Einsatz in der industriellen Fertigungstechnik ist jedoch auch eine weitere Art von Klebebändern von großer Bedeutung. In diesen Klebebändern, die teilweise auch als reaktive (Haft)Klebebänder bezeichnet werden, wird eine aushärtbare Klebemasse, die manchmal auch als Reaktivklebemasse bezeichnet werden, eingesetzt. Entsprechende aushärtbare Klebemassen bzw. Reaktivklebemasse haben in dem für die Applikation vorgesehenen Zustand noch nicht ihren maximalen Vernetzungsgrad erreicht und können durch äußere Einflüsse ausgehärtet werden, indem die Polymerisation in der Reaktivklebemasse initiiert und dadurch der Vernetzungsgrad erhöht wird. Hierbei verändern sich die mechanischen Eigenschaften der nunmehr ausgehärteten Klebemasse, wobei insbesondere die Viskosität, die Oberflächenhärte und die Festigkeit zunehmen.

Reaktivklebemassen sind im Stand der Technik bekannt und können aus chemischer Sicht sehr unterschiedliche Zusammensetzungen aufweisen. Diesen Reaktivklebemassen ist gemein, dass die Vernetzungsreaktion durch externe Einflussfaktoren ausgelöst werden kann, beispielsweise durch Energiezufuhr, insbesondere durch Temperatur-, Plasma- oder Strahlenhärtung, und/oder den Kontakt mit einer die Polymerisation fördernden Substanz, wie es beispielsweise bei feuchtigkeitshärtenden Klebemassen der Fall ist. Beispielhafte Klebemassen sind beispielsweise in der DE 102015222028 A1, EP 3091059 A1, EP 3126402 B1, EP 2768919 B1, DE 102018203894 A1, WO 2017174303 A1 und US 4661542 A offenbart.

Auf Basis von radikalisch polymerisierbaren Monomeren oder Oligomeren, wie zum Beispiel reaktiven Acrylatmonomeren, sind 2-Komponentenklebesysteme seit Jahren bekannt. In diesen radikalisch polymerisierenden Systemen wird ein aus zwei Komponenten bestehendes Klebstofffilm-System auf die zu verklebenden Teile aufgetragen, wobei entweder zwei flüssige Komponenten oder aber zwei Haftklebebänder zum Einsatz kommen. Beispielsweise besteht bzw. enthält die eine Komponente aus den zu polymerisierenden Monomeren und einem Aktivator, während die andere Komponente aus einer radikalbildenden Substanz (auch Härter oder Initiator genannt) und den zu polymerisierenden Monomeren besteht bzw. diese enthält. Nach Durchmischen oder zumindest Kontaktieren der beiden Komponenten entsteht durch chemische Reaktion des Aktivators mit der radikalbildenden Substanz mindestens ein Radikal und die Polymerisationsreaktion der zu polymerisierenden Monomere beginnt. Die Radikalkettenpolymerisation des Monomers findet anschließend bis zu einem Kettenabbruch statt und die Klebemasse härtet somit aus, wodurch eine dauerhafte Verklebung der zu verklebenden Teile erreicht wird. Solche 2-Komponenten Haftklebebänder auf Basis von reaktiven Acrylatmonomeren werden beispielsweise in EP 300 847 A1, EP 3 010 989 A1, EP 3 063 243 A1, WO 2018/104053 A1 und EP 3 328 951 A1 beschrieben. Ein wesentlicher Nachteil dieser Filme ist die Tatsache, dass es zwei Filme sind, die formschlüssig in Kontakt gebracht werden müssen, was insbesondere dann zu einem Problem werden kann, wenn die zu verklebenden Flächen sehr lang und schmal sind und somit auch die entsprechenden Klebstofffilme sehr lang und schmal sein müssen.

Einkomponentige Klebstofffilme auf Basis von Acrylmonomeren gehören ebenfalls zum allgemein bekannten Stand der Technik. Diese werden üblicherweise mit Licht, insbesondere UV-Licht gehärtet. Die Härtungsreaktion wird dabei mit Hilfe eines Photoinitiators gestartet, der nach der Absorption von (UV)-Licht in einer Photolysereaktion zerfällt und so reaktive Spezies bildet, die die radikalische Polymerisation auslösen. Nachteilig kann hier die Schnelligkeit der Aushärtereaktion sein, insbesondere, wenn nicht-transparente Substrate verklebt werden sollen. Sobald die Reaktion ausgelöst ist, bleibt in der Regel nicht mehr genügend Zeit zum Fügen der zu verklebenden Bauteile. Somit sind solche Klebstofffilme nur für die Verklebung von (UV)-transparenten Substraten geeignet, da die Bestrahlung dann nach dem Fügen der Bauteile durch die Bauteile hindurch erfolgen kann. Nachteilig an diesem Klebstofffilmtyp ist weiterhin, dass die Polymerisation nicht als Dunkelreaktion weiterläuft.

So wird zum Beispiel in DE 10 2019 209 513 A1 ein Klebstofffilm bzw. Haftklebeband auf Basis von Acrylatmonomeren beschrieben, der diese geschilderten Nachteile des Standes der Technik nicht zeigt. Als nachteilig hat sich hier eine für viele Anwendungen unzureichende Feuchtwärmebeständigkeit herausgestellt.

In EP 3 390 553 A1 wird ein Verfahren vorgeschlagen, in dem ein Klebeband aus zwei miteinander reagierenden Schichten A und B, die durch eine Barriereschicht voneinander getrennt sind, mit Hilfe eines Lasers zur Reaktion und somit Aushärtung gebracht wird, indem die Barriereschicht durch die Einwirkung des Laserlichts entfernt wird.

EP 3 126 402 A1 offenbart ein Verfahren, in dem eine radikalische Polyreaktion durch PlasmaBehandlung eines Klebstofffilms, enthaltend eine hinsichtlich einer radikalischen Polyreaktion reaktive Substanz und zusätzlich eine katalytisch aktive Substanz, ausgelöst wird. Mit diesem Verfahren wird eine genügend langsame Aushärtegeschwindigkeit erreicht.

Die DE 10 2021 125429 A1 offenbart einen Klebstofffilm der bzw. ein Haftklebeband das mindestens ein reaktives Acrylatmonomer, einen Initiator, einen Photoredox-Katalysator, (d) ein Polymer aus N-Vinylverbindungen und ein filmbildendes Polymer umfasst.

Solche Haftklebebänder eignen sich insbesondere für miniaturisierte Anwendungen, wie sie beispielsweise in der Elektronikindustrie gefordert sind. Hier kommt es immer mehr darauf an, die Verbindungen zwischen den Bauteilen sehr präzise und platzsparend zu realisieren. Zudem steigen wegen der weltweit immer noch erheblichen Nachfrage nach Kommunikations- und Unterhaltungselektronik auch die Anforderungen an die Leistungsfähigkeit der Geräte stetig, so dass auch die verwendeten Klebebänder ständig neuen, zumindest aber wachsenden Anforderungen an ihre Performance unterliegen. Insbesondere wird es - beispielsweise durch die Entwicklung von am Körper getragenen elektronischen Geräten (so genannten Wearables) wie etwa Smart-Watches - immer wichtiger, dass die dort verwendeten Verklebungen neben den hohen Verklebungsfestigkeiten (wie von (semi-) strukturellen Klebstoffen erwartet) auch eine hohe Resistenz gegenüber verschiedenen Chemikalien (wie zum Beispiel Schweiß, Hautfett oder Talg, Sonnenschutzcreme oder kosmetische Hautpflegemittel aufweisen). Diese Beständigkeit gegenüber Chemikalien (sogenannte "chemical resistance") wird dadurch simuliert, dass die ausgehärteten Haftklebebänder auch nach längerer Lagerung in verschiedenen Medien eine annehmbare Verklebungsfestigkeit aufweisen und idealerweise kaum bis gar nicht an Verklebungsfestigkeit verlieren. Ähnliche Anforderungen werden auch vermehrt an andere elektronische Geräte wie Smartphones, Tablets, Notebooks, Kameras, Videokameras, Tastaturen und Touchpads gestellt.

Die aus den oben genannten Offenbarungen bekannten Haftklebebänder weisen im ausgehärteten Zustand zwar eine ausreichend hohe Verklebungsfestigkeit und teilweise auch Feuchtwärmebeständigkeit auf, jedoch ist die Beständigkeit gegenüber Chemikalien (chemische Beständigkeit) nur in geringem Maße vorhanden. Im Lichte der vorstehenden Ausführungen besteht ein großer Bedarf nach Haftklebebändern, die eine verbesserte chemische Beständigkeit aufweisen. Dabei ist natürlich ebenso zu beachten, dass die (End)verklebungsfestigkeit, die Stanzbarkeit sowie die initiale Haftklebrigkeit zumindest auf gleichem Niveau erhalten bleiben sollte.

Die primäre Aufgabe der vorliegenden Erfindung war es, die vorstehend beschriebenen Nachteile des Standes der Technik zu beseitigen oder zumindest zu verringern.

Insbesondere war es die Aufgabe der vorliegenden Erfindung, ein reaktives Haftklebeband bereitzustellen, welches eine verbesserte chemische Beständigkeit, beispielsweise gegenüber Schweiß, Hautfett oder Talg, Sonnenschutzcreme oder kosmetischen Hautpflegemitteln bzw. gegenüber einer Mischung aus Isopropanol / Wasser aufweist. Häufig wird in der Entwicklung von Klebebändern eine Mischung aus Isopropanol / Wasser 7:3 gewählt, um Klebemassen auf ihre chemische Beständigkeit gegenüber polaren Lösungsmitteln hin zu optimieren. Diese Mischung ist demnach ein sogenannter Gatekeeper, der zu bestehen ist, bevor das volle Spektrum an unterschiedlichen Chemikalien getestet wird.

Es war eine weitere Aufgabe der vorliegenden Erfindung, ein reaktives Haftklebeband bereitzustellen, welche neben einer ausreichenden oder verbesserten chemischen Beständigkeit noch eine hohe oder verbesserte Verklebungsfestigkeit aufweist.

Eine weitere Aufgabe der vorliegenden Erfindung war es ein reaktives Haftklebeband bereitzustellen, welches eine gute bzw. verbesserte (initiale) Haftklebrigkeit aufweist und gleichzeitig eine ausreichende oder verbesserte chemische Beständigkeit besitzt.

Eine weitere Aufgabe der vorliegenden Erfindung war es ein reaktives Haftklebeband bereitzustellen, welches im ausgehärteten Zustand eine hohe oder verbesserte Verklebungsfestigkeit aufweist.

Zudem war es eine sekundäre Aufgabe der vorliegenden Erfindung, eine Verwendung der anzugebenden reaktiven Haftklebebänder zur Verklebung von zwei oder mehr Komponenten bereitzustellen.

Die Erfinder der vorliegenden Erfindung haben nunmehr gefunden, dass sich die vorstehend beschriebenen Aufgaben überraschenderweise lösen lassen, wenn in der Reaktivklebemasse für das erfindungsgemäße reaktive Haftklebeband als Basis ein Poly(meth)acrylat, welches einen Anteil von mindestens 15 Gewichtsprozent, insbesondere von mindestens 55 Gewichtsprozent an Monomeren mit aromatischen Resten, wie Phenyl, Phenylen, Naphthyl oder Naphthylen, wobei Phenyl oder Phenylen besonders bevorzugt ist, in Kombination mit mindestens einem radikalisch polymerisierbaren Monomer oder Oligomer und mindestens einem Initiatorsystem zur Aushärtung des mindestens einen radikalisch polymerisierbaren Monomeren oder Oligomeren, eingesetzt wird, wie es in den Ansprüchen definiert ist.

Die Erfinder haben überraschenderweise und entgegen ihren Erwartungen festgestellt, dass diese Anteile und auch sehr hohe Anteile (mindestens 65 Gew.-%, mindestens 80 Gew.-% oder 100 Gew.-%) an aromatischen Resten im Poly(meth)acrylat zu einer verbesserten chemischen Beständigkeit des Gesamtsystem der reaktiven Klebemassen führen, so dass die erfindungsgemäßen reaktiven Haftklebebänder eine verbesserte chemische Beständigkeit aufweisen. Zusätzlich haben die Erfinder überraschenderweise festgestellt, dass die initiale Haftklebrigkeit des erfindungsgemäßen reaktiven Haftklebeband mit der Reaktivklebemasse auf Basis des Poly(meth)acrylat mit einem Anteil von mindestens 15 Gewichtsprozent an Monomeren mit aromatischen Resten ausreichend hoch ist und die Applikation (und Repositionierung) während der Verwendung zum Verkleben zweier Komponenten sehr gut gelingt. Zum Schluss haben die Erfinder überraschenderweise festgestellt, dass die Verklebungsfestigkeiten der erfindungsgemäßen reaktiven Haftklebebänder (nach Aushärtung) ausreichend hoch sind um nach der Härtung als (semi-)struktureller Klebstoff zu fungieren. Bevorzugt fungieren die erfindungsgemäßen reaktiven Haftklebebänder bzw. die entsprechenden Reaktivklebemassen nach der Härtung als Strukturklebstoff oder semistrukturelle Klebstoffe. Nach DIN EN 923: 2006-01 sind Strukturklebstoffe Klebstoffe, die Klebverbindungen bilden, die in einem Gefüge für eine vorgegebene längere Zeitspanne eine festgelegte Festigkeit beibehalten können (nach ASTM-Definition: "bonding agents used for transferring required loads between adherends exposed to service environments typical for the structure involved"). Es sind also Klebstoffe für chemisch und physikalisch hoch beanspruchbare Klebungen, die im ausgehärteten Zustand zur Verfestigung der Klebebänder beitragen.

Der Begriff "(semi-)struktureller Klebstoff" oder "(semi-)strukturelle Klebstoffe" umfasst die "semi-strukturellen Klebstoffe" und die "strukturellen Klebstoffe". "Semi-strukturelle Klebstoffe" sind solche gehärteten Klebstoffe, die im Zugschertest eine Zugscherfestigkeit von mindestens 1,0 MPa und bevorzugter mindestens etwa 1,5 MPa (jeweils auf Stahl) aufweisen. Als "strukturelle Klebstoffe" oder "Strukturklebstoffe" werden solche ausgehärteten Klebstoffe bezeichnet, die eine besonders hohe Zugscherfestigkeit aufweisen und die im Zugschertest eine Zugscherfestigkeit von mindestens 5 MPa, bevorzugter von mindestens 7 MPa und besonders bevorzugt von mindestens 10 MPa (jeweils auf Stahl) aufweisen.

Ohne an eine bestimmte Theorie gebunden zu sein, glauben die Erfinder, dass sich die Kombination aus (a) mindestens einem Poly(meth)acrylat, welches einen Anteil von mindestens 15 Gewichtsprozent an Monomeren mit aromatischen Resten, (b) mindestens einem radikalisch polymerisierbaren Monomer oder Oligomer, und (c) mindestens einem Initiatorsystem zur Aushärtung des mindestens einen radikalisch polymerisierbaren Monomers oder Oligomers synergistisch in der Reaktivklebemasse der erfindungsgemäßen reaktiven Haftklebebänder auf die chemische Beständigkeit, die initiale Haftklebrigkeit und die Verklebungsfestigkeit auswirkt.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Die Erfindung betrifft ein reaktives Haftklebeband umfassend mindestens eine Reaktivklebemasse enthaltend eine Basismasse, wobei die Basismasse
(a) mindestens ein Poly(meth)acrylat, und
(b) mindestens ein radikalisch polymerisierbares Monomer oder Oligomer,
   enthält,
   und wobei die Reaktivklebemasse zusätzlich
(c) mindestens ein Initiatorsystem zur Aushärtung des mindestens einen radikalisch polymerisierbaren Monomers oder Oligomers,
   umfasst,
dadurch gekennzeichnet, dass
das Poly(meth)acrylat auf eine Monomerzusammensetzung zurückzuführen ist, die
(i) 15 Gew.-% bis 100 Gew.-% eines oder mehrerer Monomere ausgewählt aus der Gruppe bestehend aus
   a. einem oder mehreren Monomeren der Formel (I) 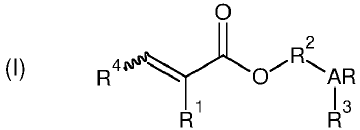
      worin R¹ für ein Wasserstoffatom oder eine Methylgruppe,
      R² für eine unsubstituierte, lineare oder verzweigte C₁-C₂₂-Alkylkette,
      AR für einen aromatischen Rest,
      R³ für H, eine unsubstituierte, lineare oder verzweigte C₁-C₅-Alkylkette, eine Hydroxygruppe, C₁-C₁₀-Alkoxygruppe oder Aryloxygruppe,
      R⁴ für H oder einen Phenylring steht,
   b. einem oder mehreren Monomeren der Formel (II) 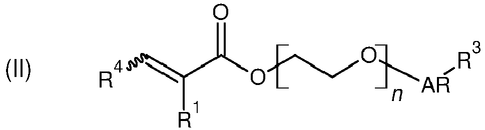
      worin R¹ für ein Wasserstoffatom oder eine Methylgruppe,
      AR für einen aromatischen Rest,
      R³ für H, eine unsubstituierte, lineare oder verzweigte C₁-C₅-Alkylkette, eine Hydroxygruppe, C₁-C₁₀-Alkoxygruppe oder Aryloxygruppe, und
      R⁴ für H oder einen Phenylring steht, und n = 0 bis 10 ist,
   c. Styrol, und
   d. Methylstyrol; und
(ii) 0 Gew.-% bis 85 Gew.-% eines oder mehrerer Comonomere,
   wobei das Comonomer oder die Comonomere ausgewählt sind aus der Gruppe der (Meth)acrylat-Monomere und copolymerisierbaren Vinylmonomere, und
   wobei das Comonomer oder die Comonomere nicht den Monomeren der Formel (I), den Monomeren der Formel (II), Styrol und Methlystyrol entsprechen,
   umfasst oder daraus besteht, wobei die Gewichtsanteile jeweils auf das Gesamtgewicht der Monomerzusammensetzung bezogen sind.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verwendungen und Verfahren ergeben sich aus den Merkmalen bevorzugter reaktiver Haftklebebänder.

Zum Zwecke einer bestmöglichen Verarbeitbarkeit beim Endanwender weist die Reaktivklebemasse der vorliegenden Erfindung haftklebrige Eigenschaften bzw. eine intrinsische Haftklebrigkeit auf. Die Reaktivklebmasse kann somit als Haftklebemasse klassifiziert werden kann. Die Haftklebrigkeit erlaubt vor der Aushärtung eine zuverlässige und sichere Applikation der reaktiven Haftklebebänder am Substrat.

Eine Haftklebemasse ist in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Die Haftklebrigkeit eines Haftklebebandes ergibt sich daraus, dass als Klebemasse eine Haftklebemasse verwendet wird. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G') und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet. Der Speichermodul G' ist wie folgt definiert: G' = (τ/γ) •cos(δ) (τ = Schubspannung, γ = Deformation, δ = Phasenwinkel = Phasenverschiebung zwischen Schubspannungs- und Deformationsvektor). Die Definition des Verlustmoduls G" lautet: G" = (τ/γ) • sin(δ) (τ = Schubspannung, γ = Deformation, δ = Phasenwinkel = Phasenverschiebung zwischen Schubspannungs- und Deformationsvektor).

Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10⁰ bis 10¹ rad/sec sowohl G` als auch G" zumindest zum Teil im Bereich von 10³ bis 10⁷ Pa liegen. "Zum Teil" heißt, dass zumindest ein Abschnitt der G'-Kurve innerhalb des Fensters liegt, das durch den Deformationsfrequenzbereich von einschließlich 10⁰ bis einschließlich 10¹ rad/sec (Abszisse) sowie den Bereich der G'-Werte von einschließlich 10³ bis einschließlich 10⁷ Pa (Ordinate) aufgespannt wird, und wenn zumindest ein Abschnitt der G"-Kurve ebenfalls innerhalb des entsprechenden Fensters liegt.

Zur Vereinfachung definieren die Erfinder, dass ein reaktives Haftklebeband im Sinne der vorliegenden Erfindung eine Klebkraft im unausgehärteten Zustand von wenigstens 1 N/cm besitzt und es nahezu rückstandsfrei entfernt wird (d.h. adhäsives Versagen im Test). Die Klebkraft wird hierbei auf Stahl analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 µm verwendet, wie sie von der Firma Coveme (Italien) erhältlich ist. Die Verklebung eines 2 cm breiten Messstreifens wird dabei mittels einer Anrollmaschine mit 4 kg bei einer Temperatur von 23 °C vorgenommen. Das Klebeband wird sofort nach der Applikation abgezogen. Der Messwert (in N/cm) ergibt sich als Mittelwert aus drei Einzelmessungen. Kohäsives Versagen in diesem Test zeigen bei Raumtemperatur klebrige Klebstoffe oder Klebebänder, deren Kohäsion nicht ausreichend für ein rückstandfreies Entfernen ist. Solche Klebstoffe oder Klebebänder sind im Sinne der Erfindung keine Haftklebstoffe.

Die erfindungsgemäßen reaktiven Haftklebebänder weisen eine gute oder eine sehr gute Beständigkeit gegenüber Chemikalien (sogenannte "chemical resistance") auf und sind in dieser Hinsicht bekannten reaktiven Haftklebebänder aus dem Stand der Technik regelmäßig überlegen, die häufig keinerlei chemische Beständigkeit zeigen. Die chemische Beständigkeit zeichnet sich insbesondere dadurch aus, dass auch die entsprechend gelagerten Haftklebebänder zu Verklebungen führen, deren Eigenschaften nach der Verklebung, insbesondere deren Verklebungsfestigkeiten, sehr gut sind. Haftklebebänder, die schlechtere chemische Beständigkeit besitzen, führen hingegen zu Verklebungsprodukten mit geringerer Stabilität, wenn das Verklebungsprodukt solchen Bedingungen ausgesetzt wird.

Die erfindungsgemäßen reaktiven Haftklebebänder zeigen eine gute Chemikalienbeständigkeit mit entsprechenden Werten im (weiter unten beschriebenen) Push-Out-Test von mindestens 0,01 MPa nach einer Lagerung für 72 h bei 65 °C in Isopropanol/Wasser (70 % Volumenanteile / 30 % Volumenanteile). Bevorzugt zeigen sie eine sehr gute Chemikalienbeständigkeit mit entsprechenden Werten im (weiter unten beschriebenen) Push-Out-Test von mindestens 0,1 MPa und besonders bevorzugt zeigen sie eine hervorragende Chemikalienbeständigkeit mit entsprechenden Werten im (weiter unten beschriebenen) Push-Out-Test von mindestens 0,3 MPa, beides nach einer Lagerung für 72 h bei 65 °C in Isopropanol/Wasser (70 / 30).

Der Begriff "Poly(meth)acrylat" umfasst erfindungsgemäß sowohl Polymere auf Basis von Estern der Acrylsäure als auch solche auf Basis von Estern der Acrylsäure und Methacrylsäure als auch solche auf Basis von Estern der Methacrylsäure. Die Begriffe "(Meth)Acrylsäureester" und "(Meth)acrylat-" umfassen erfindungsgemäß sowohl Acrylsäureester als auch Methacrylsäureester bzw. sowohl Acrylate als auch Methacrylate.

Die Reaktivklebemasse des erfindungsgemäßen reaktiven Haftklebebands umfasst eine Basismasse.

Die Basismasse enthält
(a) mindestens ein Poly(meth)acrylat aus den Monomeren (i) und (ii), und
(b) mindestens ein radikalisch polymerisierbares Monomer oder Oligomer.

Ferner kann die Basismasse (d) mindestens ein weiteres Polymer enthalten.

Die Basismasse ist durch die Gesamtmenge an Poly(meth)acrylaten, weiteren Polymeren und radikalisch polymerisierbaren Monomeren und Oligomeren definiert.

Bei den weiteren Polymeren kann es sich um sämtliche Polymere handeln, die keine Poly(meth)acrylate aus den Monomeren (i) und (ii) sind.

Das Gesamtgewicht der Bestandteile der Basismasse der Reaktivklebemeasse steht hier und im Folgenden somit für die gesamte Menge an eingesetzten Poly(meth)acrylat aus den Monomeren (i) und (ii), weiteren Polymeren und radikalisch polymerisierbaren Monomeren und Oligomeren, die als Summe in Gewichtsprozent (Gew.-%) erhalten wird und 100 Gew.-% entspricht bzw. die sich immer auf 100 Gewichtsprozent aufsummieren.

Dies bedeutet, dass in nachfolgend offenbarten Ausführungsformen, in denen beispielsweise für die Poly(meth)acrylate gemäß (i) bevorzugte Ausgestaltungen offenbart werden, auch sonstige, nicht-bevorzugte Poly(meth)acrylate in der erfindungsgemäßen Klebemasse für die Berechnung der Gewichtsanteile unverändert herangezogen werden müssen, da auch diese einen Teil der Basismasse bilden.

Gegebenenfalls weitere optional vorliegende Bestandteile, wie Lösemittel beziehungsweise Wasser, dienen nur der Herstellung und werden in dieser Betrachtung nicht zum Gesamtgewicht der Bestandteile der Basismasse gezählt. Das gilt auch für Lösemittel, die gegebenenfalls in den kommerziell erhältlichen Rohstoffen bereits enthalten sind. Ferner wird die Menge an eventuell enthaltenen Additiven, wie unten beschrieben, nicht zu den 100 Gewichtsprozent der Basismasse gezählt.

Die Reaktivklebemasse enthält bevorzugt 50 % oder mehr, bevorzugt 70 % oder mehr, besonders bevorzugt 80 % oder mehr, ganz besonders bevorzugt 90 % oder mehr, insbesondere bevorzugt 95 % oder mehr, der Basismasse, bezogen auf die Gesamtmasse der Reaktivklebemasse.

Die Basismasse der Reaktivklebemasse des erfindungsgemäßen reaktiven Haftklebebands umfasst bevorzugt 10 Gew.-% bis 90 Gew.-% mindestens eines Poly(meth)acrylats (a), bevorzugter umfasst die Basismasse der Reaktivklebemasse 20 Gew.-% bis 70 Gew.-% und insbesondere bevorzugt 50 Gew.-% bis 70 Gew.-% mindestens eines Poly(meth)acrylats (a), jeweils bezogen auf das Gesamtgewicht der Basismasse der Reaktivklebemasse.

Die Gewichtsprozentangaben (Gew.-%) beziehen sich auf das mindestens eine Poly(meth)acrylat oder auf die Summe aller Poly(meth)acrylate, falls zwei oder mehr Poly(meth)acrylate vorliegen.

Die Reaktivklebemasse enthält zusätzlich zu 100 Gew.-% der Basismasse (c) mindestens ein Initiatorsystem zur Aushärtung des mindestens einen radikalisch polymerisierbaren Monomers oder Oligomers.

Das Poly(meth)acrylat bzw. die Poly(meth)acrylate der Reaktivklebmasse im erfindungsgemäßen reaktiven Haftklebeband ist bzw. sind auf eine Monomerzusammensetzung zurückzuführen ist, die
(i) 15 Gew.-% bis 100 Gew.-% eines oder mehrere Monomere ausgewählt aus der Gruppe bestehend aus
   a. einem oder mehreren Monomeren der Formel (I) 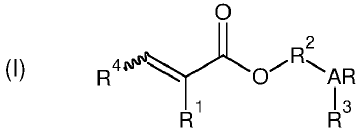
      worin R¹ für ein Wasserstoffatom oder eine Methylgruppe,
      R² für eine unsubstituierte, lineare oder verzweigte C₁-C₂₂-Alkylkette,
      AR für einen aromatischen Rest,
      R³ für H, eine unsubstituierte, lineare oder verzweigte C₁-C₅-Alkylkette, eine Hydroxygruppe, C₁-C₁₀-Alkoxygruppe oder Aryloxygruppe,
      R⁴ für H oder einen Phenylring steht,
   b. einem oder mehreren Monomeren der Formel (II) 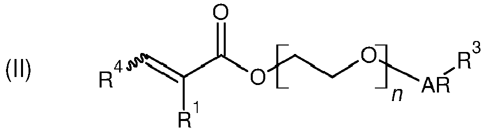
      worin R¹ für ein Wasserstoffatom oder eine Methylgruppe,
      AR für einen aromatischen Rest,
      R³ für H, eine unsubstituierte, lineare oder verzweigte C₁-C₅-Alkylkette, eine Hydroxygruppe, C₁-C₁₀-Alkoxygruppe oder Aryloxygruppe, und
      R⁴ für H oder einen Phenylring steht, und n = 0 bis 10 ist,
   c. Styrol, und
   d. Methylstyrol; und
(ii) 0 Gew.-% bis 85 Gew.-% eines oder mehrerer Comonomere,
   wobei das Comonomer oder die Comonomere ausgewählt sind aus der Gruppe der (Meth)acrylat-Monomere und copolymerisierbaren Vinylmonomeren, und wobei das Comonomer oder die Comonomere nicht den Monomeren der Formel (I), den Monomeren der Formel (II), Styrol und Methylstyrol entsprechen,
   umfasst oder daraus besteht, wobei die Gewichtsanteile jeweils auf das Gesamtgewicht der Monomerzusammensetzung bezogen sind.

Zur Herstellung der Poly(meth)acrylate können prinzipiell alle radikalischen oder radikalischkontrollierten Polymerisationen eingesetzt werden, ebenso Kombinationen verschiedener Polymerisationsverfahren. Neben der konventionellen, freien radikalischen Polymerisation sind dies z. B. auch die ATRP, die Nitroxid/TEMPO- kontrollierte Polymerisation oder der RAFT-Prozess. Die Poly(meth)acrylate können durch Copolymerisation der (Co)Monomere unter Verwendung üblicher Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird. Die Polymerisation kann in Polymerisationsreaktoren durchgeführt werden, die im Allgemeinen mit einem Rührer, mehreren Zulaufgefäßen, Rückflusskühler, Heizung und Kühlung versehen sind und für das Arbeiten unter N₂-Atmosphäre und Überdruck ausgerüstet sind. Die radikalische Polymerisation wird in Gegenwart eines oder mehrerer organischer Lösungsmittel und/oder in Gegenwart von Wasser oder in Substanz durchgeführt. Es wird dabei angestrebt, die verwendete Lösungsmittelmenge so gering wie möglich zu halten. Die Polymerisationszeit beträgt in der Regel - je nach Umsatz und Temperatur - zwischen 6 und 48 Stunden.

Das mittels Gelpermeationschromatographie (GPC) bestimmte gewichtsmittlere Molekulargewicht M_{w} der Poly(meth)acrylate beträgt in einer bevorzugten Ausführungsform mindestens 20.000 g/mol, insbesondere mindestens 35.000 g/mol, bevorzugt zwischen 50.000 und 2.000.000 g/mol, insbesondere zwischen 100.000 und 2.000.000 g/mol, besonders bevorzugt zwischen 700.000 und 1.700.000 g/mol und am bevorzugsten zwischen 1.000.000 und 1.700.000 g/mol.

Es ist auch denkbar Mischungen aus einem hochmolekularen (d.h. gewichtsmittleres Molekulargewicht M_{w} von >20.000 g/mol, insbesondere mindestens 35.000 g/mol) Poly(meth)acrylat, ausschließlich aufgebaut aus einem oder mehreren Comonomeren (ii), und einem niedermolekularen (d.h. gewichtsmittleres Molekulargewicht M_{w} zwischen 3.000 und 20.000 g/mol) Poly(meth)acrylat, ausschließlich aufgebaut aus einem oder mehreren Monomeren (i), zu verwenden, wobei das Verhältnis von hochmolekularem Poly(meth)acrylat zu niedermolekularem Poly(meth)acrylat nicht kleiner als 0,5, bevorzugt nicht kleiner als 1, insbesondere nicht kleiner als 1,25 sein sollte, um gute Haftklebeeigenschaften im unausgehärteten Zustand zu erzielen.

Die Bestimmung durch Gelpermeationschromatographie (GPC) erfolgt wie unter den Prüfmethoden unten beschrieben.

Zur Lösungsmittelpolymerisation werden als Lösemittel vorzugsweise Ester gesättigter Carbonsäuren (z.B. Ethylacetat), aliphatische Kohlenwasserstoffe (z.B. n-Hexan oder n-Heptan), Ketone (z.B. Aceton oder Methylethylketon), Siedegrenzbenzin oder Gemische dieser Lösungsmittel verwendet. Bevorzugt wird ein Lösungsmittelgemisch aus Aceton und Isopropanol eingesetzt, wobei der Isopropanolgehalt zwischen 1 und 10 Gewichtsprozent liegt. Als Polymerisationsinitiatoren werden gewöhnlich übliche radikalbildende Verbindungen, wie beispielsweise Peroxide und Azoverbindungen, eingesetzt. Auch Initiatorgemische können verwendet werden. Bei der Polymerisation können auch Thiole als Regler zur Molekulargewichtssenkung und Verringerung der Polydispersität eingesetzt werden. Als weitere sogenannte Polymerisationsregler können zum Beispiel Alkohole und Ether verwendet werden.

In einer Ausführungsform werden die Poly(meth)acrylate über das sogenannte "Sirup-Verfahren" erhalten. Dazu wird in einem vorgelagerten Schritt die Monomerzusammensetzung zu einem Sirup vorpolymerisiert. Dieser Sirup wird dann in der Formulierung der Reaktivklebmasse eingesetzt und nach dem Beschichtungsschritt zum Beispiel mit Licht einer Wellenlänge, die den kationischen Initiator nicht aktiviert, ausreagieren gelassen. Über dieses Verfahren können die erfindungsgemäßen Klebebänder erhalten werden.

Der aromatische Rest der Gruppen AR ist bevorzugt ausgewählt aus der Gruppe bestehend aus Phenyl-Gruppen, Phenylen-Gruppen, Naphthyl-Gruppen und Naphthylen-Gruppen, die optional Substituenten tragen können. Besonders bevorzugt ist der aromatische Rest AR ausgewählt aus der Gruppe bestehend aus Phenyl-Gruppen, Phenylen-Gruppen, Naphthyl-Gruppen und Naphthylen-Gruppen, wobei Phenyl-Gruppen oder Phenylen-Gruppen ganz besonders bevorzugt sind.

Unter einer "Phenylen-Gruppe" wird in Übereinstimmung mit dem fachmännischen Verständnis eine Phenyl-Gruppe verstanden, die wenigstens zweifach gebunden ist.

Dies gilt analog für Naphthylen.

In einer bevorzugten Ausführungsform enthalten die Monomere (i) einen Phenylring, d.h. AR in Formel (I) steht für eine Phenyl-Gruppe oder eine Phenylen-Gruppe und R⁴ steht für Wasserstoff, daher sind sie ausgewählt aus der Gruppe bestehend aus
a. einem oder mehreren Monomeren der Formel (la) 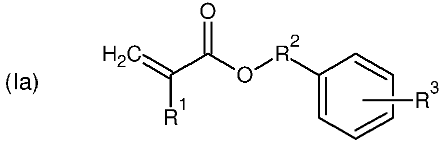
   worin R¹ für ein Wasserstoffatom oder eine Methylgruppe,
   R² für eine unsubstituierte, lineare oder verzweigte C₁-C₂₂-Alkylkette, und
   R³ für H, eine unsubstituierte, lineare oder verzweigte C₁-C₅-Alkylkette, eine Hydroxygruppe, C₁-C₁₀-Alkoxygruppe oder Aryloxygruppe steht,
      und
b. einem oder mehreren Monomeren der Formel (IIa) 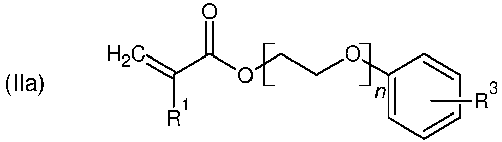
   worin R¹ für ein Wasserstoffatom oder eine Methylgruppe,
   R³ für H, eine unsubstituierte, lineare oder verzweigte C₁-C₅-Alkylkette, eine Hydroxygruppe, C₁-C₁₀-Alkoxygruppe oder Aryloxygruppe steht, und n = 0 bis 10 ist.

Die Monomere (i) sind bevorzugt ausgewählt aus der Gruppe der Monomere der Formel (la) und der Monomere der Formel (IIa), wobei insbesondere bei den Monomeren der Formel (IIa) n = 1 bis 4 bevorzugt ist und wobei insbesondere bei den Monomeren der Formel (IIa) unsubstituierte C₁-C₈-Alkylkette für R², und H oder tert.-butyl für R³ bevorzugt sind. Insbesondere sind die Monomere (i) ausgewählt aus der Gruppe:
Benzylacrylat, Phenylacrylat, 2-Phenylethylacrylat, 3-Phenylpropylacrylat, 4-Phenylbutylacrylat, 5-Phenylpentylacrylat, 6-Phenylhexylacrylat, Benzylmethylacrylat, Phenylmethacrylat, 2-Phenylethylmethacrylat, 3-Phenylpropylmethacrylat, 4-Phenylbutylmethacrylat, 5-Phenylpentylmethacrylat, 6-Phenylhexylmethacrylat, 2-Phenoxyethylacrylat, 2-Phenoxydiethyleneglycolacrylat, 2-Phenoxytriethyleneglycolacrylat, 2-Phenoxytetraethyleneglycolacrylat, 2-Phenoxypentaethyleneglycolacrylat, 2-phenoxyhexaethyleneglycolacrylat, 2-Phenoxyheptaethyleneglycolacrylat, 2-Phenoxyoctaethyleneglycolacrylat, 2-Phenoxynonaethyleneglycolacrylat, 2-Phenoxydecaethyleneglycolacrylat, 2-Phenoxyethylmethacrylat, 2-Phenoxydiethyleneglycolmethacrylat, 2-Phenoxytriethyleneglycolmethacrylat, 2-Phenoxytetraethyleneglycolmethacrylat, 2-Phenoxypentaethyleneglycolmethacrylat, 2-Phenoxyhexaethyleneglycolmethacrylat, 2-Phenoxyheptaethyleneglycolmethacrylat, 2-Phenoxyoctaethyleneglycolmethacrylat, 2-Phenoxynonaethyleneglycolmethacrylat, 2-Phenoxydecaethyleneglycolmethacrylat, 4-tert.-Butylphenylacrylat, 4-tert.-Butylphenylmethacrylat, 2-(4-tert.-Butyl)phenoxyethylacrylat, 2-(4-tert.-Butyl)phenoxydiethyleneglycolacrylat, 2-(4-tert.-Butyl)phenoxytriethyleneglycolacrylat, 2-(4-tert.-Butyl)phenoxytetraethyleneglycolacrylat, 2-(4-tert.-Butyl)phenoxypentaethyleneglycolacrylat, 2-(4-tert.-Butyl)phenoxyhexaethyleneglycolacrylat, 2-(4-tert.-Butyl)phenoxyheptaethyleneglycolacrylat, 2-(4-tert.-Butyl)phenoxyoctaethyleneglycolacrylat, 2-(4-tert.-Butyl)phenoxynonaethyleneglycolacrylat, 2-(4-tert.-Butyl)phenoxydecaethyleneglycolacrylat, 2-(4-tert.-Butyl)phenoxyethylmethacrylat, 2-(4-tert.-Butyl)phenoxydiethyleneglycolmethacrylat, 2-(4-tert.-Butyl)phenoxytriethyleneglycolmethacrylat, 2-(4-tert.-Butyl)phenoxytetraethyleneglycolmethacrylat, 2-(4-tert.-Butyl)phenoxypentaethyleneglycolmethacrylat, 2-(4-tert.-Butyl)phenoxyhexaethyleneglycolmethacrylat, 2-(4-tert.-Butyl)phenoxyheptaethyleneglycolmethacrylat, 2-(4-tert.-Butyl)phenoxyoctaethyleneglycolmethacrylat, 2-(4-tert.-Butyl)phenoxynonaethyleneglycolmethacrylat, 2-(4-tert.-Butyl)phenoxydecaethyleneglycolmethacrylat.

Besonders bevorzugt sind die Monomere (i) ausgewählt aus der Gruppe bestehend aus Benzylacrylat, Phenylacrylat, Benzylmethacrylat, Phenylmethacrylat, 2-Phenoxyethylacrylat, 2-Phenoxyethylmethacrylat. Äußerst bevorzugt sind die Monomere (i) ausgewählt aus Benzylacrylat und Benzylmethacrylat.

Grundsätzlich sind die Comonomere (ii) ausgewählt aus allen dem Fachmann bekannten (Meth)acrylat-Monomeren und anderen radikalisch copolymerisierbaren Vinylmonomeren, wie z.B. Acrylonitril oder N-Vinylcaprolactam, die copolymerisierbar sind mit den Monomeren (i), wobei die Comonomere (ii) nicht den Monomeren (i), also den Monomeren der Formeln (I) oder (la), der Formeln (II) oder (IIa), Styrol und Methlystyrol entsprechen.

Beispiele für solche Comonomere (ii) sind Acrylsäure, Carboxyethylacrylate, Caprolactonacrylat, 1,4-Cyclohexanedimethanolmonoacrylat, 2,3-Dihydroxypropylmethacrylat, 4-Hydroxybutylacrylat, 2-Hydroxyethylacrylat, 2-Hydroxyethylmethacrylat, Hydroxypropylacrylat, n-Butylacrylat, n-Butylmethacrylat, Behenylacrylat, Behenylmethacrylat, Cetylacrylat, Ethylacrylat, Ethylmethacrylat, 2-Ethyhexylacrylat, 2-Ethyhexylmethacrylat, 2-Ethylhexyldiglycolacrylat, n-Hexylacrylat, Isobutylacrylat, Iso-Butylmethacrylat, Icosylacrylat, Isoheptadecylacrylat, Isoheptadecylmethacrylat, Isostearylacrylat, Isodecylacrylat, Isodecylmethacrylat, Isononylacrylat, Isooctylacrylat, Laurylacrylat, Laurylmethacrylat, Tetradecylacrylat, Methylacrylat, Methylmethacrylat, Methoxyethylacrylat, n-Octylacrylat, 2-Octylacrylat, n-Decylacrylat, Propylheptylacrylat, Stearylacrylat, Stearylmethacrylat, tert.-Butylacrylat, tert.-Butylmethacrylat, Cyclohexylacrylat, Cyclohexylmethacrylat, (5-Ethyl-1,3-dioxan-5-yl)methylacrylat, Dihydrodicyclopentadienylacrylat, Isobornylacrylat, Isobornylmethacrylat, Norbornylacrylat, 4-tert-Butylcyclohexylacrylat, Tetrahydrofurfurylacrylat, 3,3,5-Trimethylcyclohexylacrylat, tert.-Butylcyclohexylmethacrylat, Ethylendiglycolacrylat, Kalium-3-sulphonatopropylacrylat, 2-(O-[1'-Methylpropylideneamino]carboxyamino)ethylmethacrylat, 2-[(3,5-dimethylpyrazolyl)carboxyamino]ethylmethacrylat, Polypropylenglycolmomomethacrylat, Ureidomethacrylat, Methacrylamid, 4-Acryloylmorpholin, Acrylnitril, N,N-Dimethylacrylamid, N-tert.-Butyl acrylamid, N-Methylolmethacrylamid, N-Vinylcaprolactam, N-Vinylpyrrolidon, Vinylmethyloxazolidinon, Maleinsäureanhydrid und Vinylacetat.

Bevorzugt ist der T_{g} eines Homopolymers des jeweiligen Comonomers (ii) größer als 0 °C, bevorzugt größer als 10°C, insbesondere größer als 20 °C und besonders bevorzugt größer als 30 °C. Insbesondere umfasst die Gruppe der Comonomere (ii) keine Monomere, die mehr als eine radikalisch polymerisierbare Gruppe enthalten, da dies zu einer Vernetzung führt. Daher ist ein nicht vernetztes Poly(meth)acrylat besonders bevorzugt im Sinne dieser Erfindung.

In einer bevorzugten Ausführungsform ist das erfindungsgemäße reaktive Haftklebeband dadurch gekennzeichnet, dass das Poly(meth)acrylat auf eine Monomerzusammensetzung zurückzuführen ist, die ein stickstoffhaltiges Comonomer (ii) umfasst.

Geeignete bevorzugte Comonomere (ii) sind ausgewählt aus der Gruppe bestehend aus Acrylsäure, 1,4-Cyclohexanedimethanolmonoacrylat, 2,3-Dihydroxypropylmethacrylat, 2-Hydroxyethylmethacrylat, n-Butylmethacrylat, Behenylacrylat, Behenylmethacrylat, Cetylacrylat, Ethylmethacrylat, 2-Ethyhexylmethacrylat, 2-Ethylhexyldiglycolacrylat, n-Hexylacrylat, Isobutylacrylat, iso-Butylmethacrylat, Icosylacrylat, Isononylacrylat, Tetradecylacrylat, Methylacrylat, Methylmethacrylat, Stearylacrylat, tert.-Butylacrylat, tert.-Butylmethacrylat, Cyclohexylacrylat, Cyclohexylmethacrylat, (5-Ethyl-1,3-dioxan-5-yl)methylacrylat, Dihydrodicyclopentadienylacrylat, Isobornylacrylat, Isobornylmethacrylat, Norbornylacrylat, 4-tert-Butylcyclohexylacrylat, 3,3,5-Trimethylcyclohexylacrylat, Tert.-Butylcyclohexylmethacrylat, Kalium-3-sulphonatopropylacrylat, 2-(O-[1'-Methylpropylideneamino]carboxyamino)ethylmethacrylat, 2-[(3,5-Dimethylpyrazolyl)carboxyamino]ethylmethacrylat, Ureidomethacrylat, Methacrylamid, 4-Acryloylmorpholin, Acrylnitril, N,N-Dimethylacrylamid, N-tert.-Butylacrylamid, N-Methylolmethacrylamid, N-Vinylcaprolactam, N-Vinylpyrrolidon, Vinylmethyloxazolidinon, Maleinsäureanhydrid und Vinylacetat.

Besonders als Comonomer (ii) geeignet sind (Meth)Acrylsäureester, die ausgewählt sind aus der Gruppe bestehend aus (Meth)Acrylsäureestern, welche cyclische Kohlenstoffseitengruppen aufweisen, (Meth)Acrylsäureestern, deren Kohlenstoffseitengruppen linear oder verzweigt sind und mehr als 10 Kohlenstoffatome aufweisen, und (Meth)Acrylsäureester deren T_{g} eines Homopolymers größer als 0 °C sind.

Besonders bevorzugt sind die Comonomere (ii) ausgewählt aus der Gruppe bestehend aus: Stearylacrylat, Methylacrylat, tert.-Butylacrylat, Cyclohexylacrylat, Dihydrodicyclopentadienylacrylat, Isobornylacrylat, 1,4-Cyclohexanedimethanolmonoacrylat, Methylmethacrylat, 2-Hydroxyethylmethacrylat, tert.-Butylcyclohexylmethacrylat, Behenylmethacrylat, n-Butylmethacrylat, Cyclohexylmethacrylat, Ethylmethacrylat, Iso-Butylmethacrylat, tert.-Butylmethacrylat, Isobornylmethacrylat, tert.-Butylcyclohexylmethacrylat, 3,4-Epoxycyclohexylmethylmethacrylat, Glycidylmethacrylat. Besonders bevorzugt sind Methylmethacrylat, Isobornylacrylat, Methylacrylat, Stearylacrylat.

Die Erfinder haben überraschenderweise festgestellt, dass Comonomere (ii) ausgewählt aus der Gruppe der (Meth)Acrylsäureester, deren Kohlenstoffseitengruppen linear oder verzweigt sind und mehr als 10 Kohlenstoffatome aufweisen, einen Gewichtsanteil von bis zu 30 Gew.-%, bevorzugt bis zu 25 Gew.-%, insbesondere bis zu 20 Gew.-% am Gesamtgewicht der Monomerzusammensetzung ausmachen können und keinen negativen Einfluss auf die chemische Beständigkeit der erfindungsgemäßen Reaktivklebemasse haben.

Bevorzugt handelt es sich hierbei um Comonomere (ii) ausgewählt aus der Gruppe bestehend aus
Laurylacrylat, Laurylmethacrylat, Tetradecylacrylat, Stearylmethacrylat, Cetylacrylat, Tetradecylacrylat und Stearylacrylat; insbesondere bevorzugt ausgewählt aus der Gruppe bestehend aus Cetylacrylat, Tetradecylacrylat und Stearylacrylat.

Außerdem wurde beobachtet, dass Comonomere (ii) ausgewählt aus der Gruppe der (Meth)Acrylsäureester, welche cyclische Kohlenstoffseitengruppen aufweisen, ebenfalls einen Gewichtsanteil von bis zu 30 Gew.-%, bevorzugt 25 Gew.-%, insbesondere bis zu 20 Gew.-%, am Gesamtgewicht der Monomerzusammensetzung ausmachen können. Ohne eine an eine bestimmte Theorie gebunden zu sein, glauben die Erfinder, dass solche Gruppen aufgrund der Mischung aus der eher polarer Estergruppe und den eher unpolaren cyclischen Teilen die chemische Beständigkeit weder in die eine (polare Lösungsmittel) noch die andere (unpolare Lösungsmittel) Richtung beeinflussen.

Beispiele für solche Comonomere (ii) sind ausgewählt aus der Gruppe bestehend aus Cyclohexylacrylat, Cyclohexylmethacrylat, (5-Ethyl-1,3-dioxan-5-yl)methylacrylat, Dihydrodicyclopentadienylacrylat, Isobornylacrylat, Isobornylmethacrylat, Norbornylacrylat, 4-tert-butylcyclohexylacrylat,
3,3,5-Trimethylcyclohexylacrylat, tert.-Butylcyclohexylmethacrylat, 4-Acryloylmorpholin, N-Vinylcaprolactam, N-Vinylpyrrolidon und Vinylmethyloxazolidinon. Besonders bevorzugt sind die Comonomere (ii) ausgewählt aus der Gruppe bestehend aus Cyclohexylacrylat, Cyclohexylmethacrylat, (5-Ethyl-1,3-dioxan-5-yl)methyl acrylat, Dihydrodicyclopentadienylacrylat, Isobornylacrylat, Isobornylmethacrylat, Norbornylacrylat, 4-tert-butylcyclohexylacrylat, 3,3,5-Trimethylcyclohexylacrylat, tert.-Butylcyclohexylmethacrylat.

Die Monomerzusammensetzung auf die das Poly(meth)acrylat bzw. die Poly(meth)acrylate der Reaktivklebmasse im erfindungsgemäßen reaktiven Haftklebeband zurückzuführen ist, besteht üblicherweise aus bis zu 15 verschiedenen Monomeren. Bevorzugt besteht die Monomerzusammensetzung aus bis 5 verschiedenen Monomeren, bevorzugter aus 4 verschiedenen Monomeren, stärker bevorzugt aus 3 verschiedenen Monomeren, noch bevorzugter aus 2 verschiedenen Monomeren und am bevorzugten aus einem Monomer und damit nur aus einem Monomer (i). Im Falle von insgesamt zwei Monomeren gehören bevorzugt beide Monomere der Gruppe der Monomere (i) an und im Falle von insgesamt drei Monomeren gehören entweder zwei oder alle drei der Monomere der Gruppe der Monomere (i) an.

Besonders bevorzugt ist es, dass die Monomerzusammensetzung aus einem Monomer (i) besteht, welches bevorzugt aus Benzylacrylat und Benzylmethylacrylat ausgewählt ist, oder dass die Monomerzusammensetzung aus zwei Monomeren (i) besteht, welche aus der Gruppe bestehend aus Benzylacrylat, Phenylacrylat, Benzylmethacrylat, Phenylmethacrylat, 2-Phenoxyethylacrylat, 2-Phenoxyethylmethacrylat ausgewählt sind, und bevorzugt aus der Gruppe bestehend aus Phenoxyethylacrylat, 2-Phenoxyethylmethacrylat, Benzylacrylat und Benzylmethacrylat ausgewählt sind. Bevorzugte Kombination sind hierbei 2-Phenoxyethylacrylat und 2-Phenoxyethylmethacrylat oder Benzylacrylat und Benzylmethacrylat oder 2-Phenoxyethylacrylat und Benzylmethacrylat.

Das Poly(meth)acrylat bzw. die Poly(meth)acrylate der Reaktivklebmasse im erfindungsgemäßen reaktiven Haftklebeband ist auf eine Monomerzusammensetzung zurückzuführen, die 15 Gew.-% bis 100 Gew.-% eines oder mehrerer Monomere (i) und 0 Gew.-% bis 85 Gew.-% eines oder mehrere Comonomere (ii) umfasst oder daraus besteht. Insbesondere enthält die Monomerzusammensetzung 55 Gew.-% bis 100 Gew.-% eines oder mehrerer Monomere (i) und bevorzugter 65 Gew.-% bis 100 Gew.-%, 70 Gew.-% bis 100 Gew.-%, 75 Gew.-% bis 100 Gew.-%, 80 Gew.-% bis 100 Gew.-% oder 90 Gew.-% bis 100 Gew.-% von einem oder mehreren Monomeren (i). Entsprechende Mengen eines oder mehrere Comonomere (ii) sind enthalten, so dass insgesamt 100 Gew.-% erreicht werden. Bevorzugt sind 55 Gew.-% bis 100 Gew.-%, stärker bevorzugt 65 Gew.-% bis 100 Gew.-%, noch stärker bevorzugt 80 Gew.-% bis 100 Gew.-% und am bevorzugsten 100 Gew.-% von einem oder mehreren Monomeren (i).

In einer bevorzugten Ausführungsform ist das Poly(meth)acrylat bzw. die Poly(meth)acrylate der Reaktivklebmasse im erfindungsgemäßen reaktiven Haftklebeband gegenüber dem mindestens einen radikalisch polymerisierbaren Monomer oder Oligomer und dem mindestens einen Initiatorsystem sowie den gegebenenfalls übrigen Stoffen im Wesentlichen inert. Inert bedeutet in diesem Zusammenhang, dass die radikalisch polymerisierbaren Monomere oder Oligomere und das mindestens eine Initiatorsystem und die ggf. übrigen Stoffe vor der Lichthärtung unter geeignet gewählten Bedingungen, insbesondere bei Raumtemperatur (23 °C), im Wesentlichen nicht mit dem Poly(meth)acrylat bzw. den Poly(meth)acrylate Polymer reagieren.

Aus diesem Grund sind in einer bevorzugten Ausführungsform keine Säure, insbesondere keine Acrylsäure oder andere Monomere mit einer oder mehreren Carboxylgruppen, und keine Amine, insbesondere keine tertären Amine, als Comonomer(e) (ii) in der Monomerzusammensetzung des Poly(meth)acrylats enthalten. In einer speziellen Ausführungsform ist das Poly(meth)acrylat bzw. die Poly(meth)acrylate zusätzlich auch nach der Aktivierung der Härtungsreaktion inert. Dies bedeutet, dass in der radikalischen Reaktion das Poly(meth)acrylat nicht mit reagiert.

Die Basismasse der Reaktivklebemasse des erfindungsgemäßen reaktiven Haftklebebands umfasst mindestens ein radikalisch polymerisierbares Monomer oder Oligomer (b). In

Übereinstimmung mit dem fachmännischen Verständnis soll das radikalisch polymerisierbare Monomer oder Oligomer für ein Monomer oder Oligomer stehen, das zu einer Radikalkettenpolymerisation in der Lage ist.

Unter radikalisch polymerisierbaren Oligomeren versteht der Fachmann insbesondere radikalisch polymerisierbare Verbindungen mit einem Gewichtsmittel der Molekulargewichtsverteilung Mw von weniger als 35000 g/mol, insbesondere weniger als 15000 g/mol, insbesondere weniger als 10000 g/mol, und dabei im Rahmen der vorliegenden Erfindung insbesondere acrylierte bzw methacrylierte Ether-Oligomere, Butadien-Oligomere, Ester-Oligomere, Carbonat-Oligomere, Silikon-Oligomere, Epoxidverbindungen mit einem Gewichtsmittel der Molekulargewichtsverteilung Mw von weniger als 35000 g/mol, insbesondere weniger als 15000 g/mol, insbesondere weniger als 10000 g/mol. Dies sind unter anderem Epoxy-(Meth)acrylate, aliphatische, aromatische und Silikon-Urethan-(Meth)acrylate, aliphatische und aromatische Polyester-(Meth)acrylate, Polybutadien-(Meth)acrylate, dendritische (Meth)acrylate, Polyether-(Meth)acrylate und Polycarbonat-(Meth)acrylate erhältlich zum Beispiel von Miwon und Bomar, wie beispielsweise MIRAMER SC2565 mit einem Mw von 5200 g/mol von der Firma Miwon. Bevorzugt ist die Funktionalität der polymerisierbaren Oligomere, d.h. die Anzahl an radikalisch polymerisierbaren Gruppen pro Molekül 1 bis 20, meist 2 bis 15, hauptsächlich 2 bis 6. Die dynamische Viskosität, bestimmt nach DIN 53019-1 aus 2008, bei 25°C ist bevorzugt größer als 1 Pas, besonders bevorzugt jedoch deutlich über 10 Pas. Insbesondere zur Herstellung von guten Haftklebmassen, mit ausreichender Kohäsion eignen sich Oligomere als Bestandteil der Klebmasse mit dynamischen Viskositäten bei 25°C von größer 20 Pas, bevorzugt größer 30 Pas. Im Rahmen der vorliegenden Erfindung wird die dynamische Viskosität dabei gemäß der DIN 53019-1 aus 2008; bei 25 °C, mit einer Schergeschwindigkeit von 1 s⁻¹ bestimmt.

Ein geeignetes radikalisch polymerisierbares Monomer ist ausgewählt aus der Gruppe bestehend aus Acrylsäureestern (wie z.B. 2-Ethylhexylacrylat), Methacrylsäureestern, Vinylverbindungen und Verbindungen mit Kohlenstoff-Kohlenstoff-Doppelbindungen, sowie vernetzenden radikalisch polymerisierbaren Monomeren wie Diacrylaten, Dimethacrylaten, Triacrylaten, Trimethacrylaten und höher funktionellen Acrylaten bzw. höher funktionellen Methacrylaten. Geeignete radikalisch polymerisierbare Oligomere sind oligomere Stoffe mit Acrylat- oder Methacrylatfunktion, wobei die Funktionalisierung einfach oder mehrfach sein kann.

In einer Ausführungsform ist das erfindungsgemäße reaktive Haftklebeband dadurch gekennzeichnet, dass das mindestens eine radikalisch polymerisierbare Monomer oder Oligomer einen Siedepunkt bei 1 mbar von mindestens 30 °C, bevorzugt mindestes 60 °C, und besonders bevorzugt von mindestens 80 °C aufweist, oder bei 23 °C als Feststoff vorliegt. In diesem Zusammenhang sind radikalisch polymerisierbare Oligomere besonders bevorzugt. Daher ist in einer bevorzugten Ausführungsform das erfindungsgemäße reaktive Haftklebeband dadurch gekennzeichnet, dass die Basismasse der Reaktivklebemasse ein radikalisch polymerisierbares Oligomer umfasst.

Bevorzugte Monomere im Hinblick auf eine hohe Verklebungsfestigkeit sind Acrylsäureester und/oder Methacrylsäureester, in denen der Alkohol-Teil des Esters funktionelle Gruppen enthält. Bevorzugt sind als funktionelle Gruppen aromatische Gruppen, Urethangruppen, Harnstoffgruppen, Sauerstoff- oder Stickstoff-Heterocyclen, Ethergruppen, Estergruppen oder Hydroxy-Gruppen.

Beispiele für bevorzugte Monomere sind 2-Phenoxyethylacrylat (CAS-Nr.: 48145-04-6), 2-Phenoxyethylmethacrylat (CAS-Nr.: 10595-06-9), 2-Hydroxy-3-phenoxy-propylacrylat (CAS Nr.: 16969-10-1), 2-Hydroxy-3-phenoxy-propylmethacrylat (CAS-Nr.: 16926-87-7), 2-[2-(Methacryloyloxy)ethoxycarbonyl]benzoesäure (CAS-Nr.: 27697-00-3), 2-[[(Phenylamino)-carbonyl]oxy]ethylmethacrylat (CAS-Nr.: 51727-47-0), 2-Tert-butyl-6-[(3-tert-butyl-2-hydroxy-5-methylphenyl)methyl]-4-methylphenylprop-2-enoat (CAS-Nr.: 61167-58-6), (5-Ethyl-1,3-dioxan-5-yl)methylacrylat (CAS-Nr. 66492-51-1), (2-Oxo-1,3-dioxolan-4-yl)methylmethacrylat (CAS-Nr.: 13818-44-5), Di(ethylenglycol)-2-ethylhexyletheracrylat (CAS-Nr.: 117646-83-0), (2,2-Dimethyl-1,3-dioxolan-4-yl)methylprop-2-enoat (CAS-Nr.: 13188-82-4), Bernsteinsäure-mono-[2-(acryloyloxy)-ethylester] (CAS-Nr.: 50940-49-3), Bernsteinsäure-mono-[2-(methacryloyloxy)ethylester] (CAS-Nr.: 20882-04-6), (2,2-Pentamethylene-1,3-oxazolidyl-3)ethylmethacrylat (CAS-Nr.: 4203-89-8, 2-Hydroxy-3-(prop-2-enoyloxy)propyl-2-methyl-2-propylhexanoat (CAS-Nr.: 444649-70-1), 2-[[(Butylamino)carbonyl]oxy]ethylacrylat (CAS-Nr.: 63225-53-6), Stearylacrylat (CAS-Nr.: 4813-57-4), Stearylmethacrylat (CAS-Nr.: 32360-05-7), sowie die vernetzenden Monomere Diurethandimethacrylat (Isomerenmischung) (CAS-Nr.: 72869-86-4), Bisphenol A-glycerolatdimethacrylat (BIS-GMA, CAS-Nr.: 1565-94-2), Bisphenol A-dimethacrylat (BIS-DMA, CAS-Nr.: 3253-39-2), Ethylenglykol-diacrylat (CAS-Nr.: 2274-11-5), Ethylenglykoldimethacrylat (CAS-Nr.: 97-90-5), Trimethyloylpropanpropoxylat-triacrylat (CAS-Nr.: 53879-54-2), Trimethyloylpropan-triacrylat (CAS-Nr.: 15625- 89-5) und/oder Di(trimethylolpropan)tetraacrylat (CAS-Nr.: 94108-97-1). Besonders bevorzugt sind 2-Hydroxy-3-phenoxy-propylacrylat, 2-[[(Butylamino)carbonyl]oxy]ethyl acrylat und Diurethandimethacrylat.

Im Hinblick auf eine gute chemische Beständigkeit sind Acrylsäureester und/oder Methacrylsäureester bevorzugt, die eine Phenyl-Gruppe und eine Hydroxy-Gruppe als funktionelle Gruppen aufweisen, wie beispielsweise 2-Hydroxy-3-phenoxy-propylacrylat.

Die Basismasse der Reaktivklebemasse des erfindungsgemäßen reaktiven Haftklebebands umfasst bevorzugt 10 Gew.-% bis 80 Gew.-% mindestens eines radikalisch polymerisierbaren Monomers oder Oligomers (b), bevorzugter umfasst die Basismasse der Reaktivklebemasse 20 Gew.-% bis 60 Gew.-% und insbesondere bevorzugt 35 Gew.-% bis 45 Gew.-% mindestens eines radikalisch polymerisierbaren Monomers oder Oligomers (b), jeweils bezogen auf das Gesamtgewicht der Bestandteile der Basismasse der Reaktivklebemasse.

Die genannten Gewichtsprozentangaben beziehen sich auf das radikalisch polymerisierbare Monomer oder Oligomer oder auf die Summe aller Monomere und/oder Oligomere, falls zwei oder mehr Monomere und/oder Oligomere vorliegen. Lösemittel beziehungsweise Wasser dienen nur der Herstellung und werden in dieser Anmeldung generell nicht zur Gesamtmischung der Bestandteile des erfindungsgemäßen reaktiven Haftklebebands bzw. der Reaktivklebemasse bzw. der Basismasse der Reaktivklebemasse gezählt. Das gilt auch für Lösemittel, die gegebenenfalls in den kommerziell erhältlichen Rohstoffen bereits enthalten sind.

Bevorzugt beträgt in der Reaktivklebemasse des erfindungsgemäßen reaktiven Haftklebebands das Gewichtsverhältnis der Gesamtheit der Poly(meth)acrylate zur Gesamtheit der radikalisch polymerisierbaren Monomere oder Oligomere 3:1 bis 1:3, stärker bevorzugt 2:1 bis 1:2, insbesondere 1,5:1 bis 1:1,5.

Die Reaktivklebemasse des erfindungsgemäßen reaktiven Haftklebebands umfasst zusätzlich zur Basismasse mindestens ein Initiatorsystem (c) zur Aushärtung des mindestens einen radikalisch polymerisierbaren Monomers oder Oligomers. Beim vorliegend vorgesehenen Einsatz von mindestens einem radikalisch polymerisierbaren Monomer oder Oligomer erfolgt die Polymerisation bevorzugt mittels radikalischer Polymerisation. Daher umfasst die Reaktivklebemasse ein Initiatorsystem für die radikalische Polymerisation.

Die Reaktivklebemasse des erfindungsgemäßen reaktiven Haftklebebands umfasst bevorzugt 0,1 Gew.-% bis 10 Gew.-% mindestens eines Initiatorsystems (c) zur Aushärtung des mindestens einen radikalisch polymerisierbaren Monomers oder Oligomers, bevorzugter umfasst die Reaktivklebemasse 0,1 Gew.-% bis 5 Gew.-% und insbesondere bevorzugt 0,1 Gew.-% bis 2 Gew.-% mindestens eines Initiatorsystems (c), jeweils bezogen auf 100 Gew.-% Basismasse.

Wird ein UV-transparentes Substrat verklebt, so kann in einer Ausführungsform die Aktivierung nach der Fügung des zweiten Substrates erfolgen. In diesem Fall kann das Initiatorsystem ein Photoinitiator sein, wie sie dem Fachmann bekannt sind und z.B. in "Industrial Photoinitiators - A technical Guide" von W.A. Green erschienen bei Taylor and Francis beschrieben werden. Ein mögliches Beispiel für einen solchen Photoinitiator ist Irgacure 651 der BASF.

In einer bevorzugten Ausführungsform besteht das Initiatorsystem (c) zur Aushärtung des mindestens einen radikalisch polymerisierbaren Monomers oder Oligomers aus mindestens einem Radikalinitiator (c1) und mindestens einem Photoredox-Katalysator (c2).

Wie hierin verwendet, steht der Begriff Radikalinitiator bzw. radikalbildende Substanz, für eine Verbindung, die eine Polymerisationsreaktion oder vernetzende Polymerisationsreaktion des der radikalisch polymerisierbaren Monomers oder Oligomers einleiten kann. Der Radikalinitiator nimmt allerdings zu einem sehr geringen Anteil am Reaktionsgeschehen teil und bildet folglich keinen die Eigenschaften der Verklebung bestimmenden Polymeranteil.

Der Radikalinitiator ist bevorzugt so gewählt, dass er in der Mischung mit den radikalisch polymerisierbaren Monomeren oder Oligomeren bei Temperaturen bis 90 °C keine Polymerisation auslöst, auch nicht, wenn die Mischung mit UV oder Blaulicht bestrahlt wird. Dies gilt, solange der Mischung kein Photoredox-Katalysator oder ein anderer aktivierender Stoff zugesetzt wird.

Grundsätzlich können alle im Stand der Technik bekannten Radikalinitiatoren eingesetzt werden. Bevorzugte Radikalinitiatoren sind Peroxide, insbesondere Hydroperoxide. In einer besonders bevorzugten, erfindungsgemäßen Ausführungsform ist der Radikalinitiator (c1) ein organisches Peroxid, wie Peroxycarbonsäuren und Hydroperoxide. Besonders bevorzugt sind Hydroperoxide, insbesondere Diisopropylbenzol-hydroperoxid (CAS-Nr. 26762-93-6).

Diisopropylbenzol-hydroperoxid wird bevorzugt in Form einer 50-gewichtsprozentigen Lösung von Diisopropylhydroperoxid in Diisopropylbenzol, erhältlich unter dem Handelsnamen Peroxan^{®} IHP-50 (Firma Pergan GmbH, Bocholt, Deutschland) eingesetzt. α,α-Dimethylbenzylhydroperoxid, welches auch als Cumolhydroperoxid (CAS-Nr. 80-15-9) bekannt ist, kann ebenfalls verwendet werden. Weiterhin können zum Beispiel auch p-Menthanhydroperoxid (CAS-Nr. 26762-92-5), tert.-Amyl-hydroperoxid (CAS-Nr. 3425-61-4), tert.-Butylhydroperoxid (CAS-Nr. 75-91-2) oder 1,1,3,3-Tetramethylbutyl-hydroperoxid (CAS Nr. 5809-08-5) verwendet werden.

In einer bevorzugten Ausführungsform ist das erfindungsgemäße reaktive Haftklebeband dadurch gekennzeichnet, dass der mindestens eine Radikalinitiator (c1) ein organisches Peroxid, bevorzugt ein Hydroperoxid und am stärksten bevorzugt Diisopropylbenzol hydroperoxid ist. In einer bevorzugten Ausführungsform enthält die Reaktivklebemasse keine (bzw. weniger als 0,001 Gew.-%) tertiären Amine, weil diese mit Peroxiden reagieren und dann Radikale freigesetzt werden, so dass die Lagerstabilität negativ beeinflusst wird.

Der Anteil des Radikalinitiators (c1) an der Reaktivklebemasse des erfindungsgemäßen reaktiven Haftklebebands liegt bevorzugt im Bereich von 0,1 Gew.-% bis 9 Gew.-%, besonders bevorzugt von 0,1 Gew.-% bis 5 Gew.-%, und besonders bevorzugt von 0,1 Gew.-% bis 2 Gew.-% Radikalinitiator, jeweils bezogen auf 100 Gew.-% Basismasse.

Wie hier verwendet, steht der Begriff Photoredox-Katalysator für eine licht- oder UVlichtempfindliche Verbindung, die, wenn sie durch Licht oder UV-Licht angeregt wird, den Transfer von Elektronen zwischen chemischen Verbindungen vermitteln kann, die sonst langsamer oder gar nicht reagieren würden. Im Gegensatz zu einem Photoinitiator zerfällt ein Photoredox-Katalysator bei Bestrahlung mit Licht oder UV-Licht nicht in reaktive Spaltprodukte, sondern wird lediglich in einen angeregten Zustand versetzt, der in der Regel relativ langlebig ist und aus dem heraus Redox-Prozesse initiiert oder vermittelt werden können. Der Photoredox-Katalysator löst bevorzugt in der Mischung mit den radikalisch polymerisierbaren Monomeren oder Oligomeren bei Temperaturen bis 90 °C keine Polymerisation aus, auch nicht, wenn die Mischung mit UV- oder Blaulicht bestrahlt wird. Dies gilt, solange der Mischung kein Radikal-Initiator oder ein anderer initiierender Stoff zugesetzt wird. Der Photoredox-Katalysator ist somit kein Initiator oder Radikalinitiator. Bei Bestrahlung mit UV- oder Blaulicht aktiviert er lediglich den Initiator, der dann die Polymerisation auslöst.

Als Photoredox-Katalysatoren (c2) können die dem Fachmann bekannten Photoredox-Katalysatoren eingesetzt werden. Photoredox-Katalysatoren sind häufig Übergangsmetallkomplex, der je nach Liganden neutral oder als Kation vorliegen, mit Ruthenium, Kupfer oder Iridium als Zentralatom. Als Liganden des Übergangmetallkomplexes können bevorzugt zweizähnige Liganden eingesetzt werden, insbesondere solche mit zumindest zwei miteinander verbundenen heteroaromatischen Sechsringen, etwa in Form eines Biphenyls, die ihrerseits Teil eines komplexeren Aufbaus - wie etwa polycyclisch aromatischer Kohlenwasserstoffe und/oder überbrückter - bicyclischer oder polycyclischer - aromatischer Kohlenwasserstoffe - sein können. Werden Biphenyl-Struktureinheiten enthaltende Liganden eingesetzt, kann vorteilhaft jeweils einer der aromatischen Ringe des Biphenyls einen "Zahn" des Liganden bilden, so dass die Zweizähnigkeit gegeben ist. Bicylische aromatische Verbindungen - wie Biphenylverbindungen - oder polycylisch aromatische Verbindungen als Liganden können unsubstituiert sein - also an jedem C-Atom ein Wasserstoffatom tragen - oder ein- oder mehrfach substituiert sein. Der Übergangsmetallkomplex wirkt dabei im Sinne der vorliegenden Erfindung als Photoredox-Katalysator.

Insbesondere vorteilhaft wird erfindungsgemäß ein Übergangsmetallkomplex eingesetzt, der durch die folgende Formel (III) beschrieben werden kann oder der zumindest eine Struktureinheit umfasst, die durch die Formel (III) beschrieben werden kann: 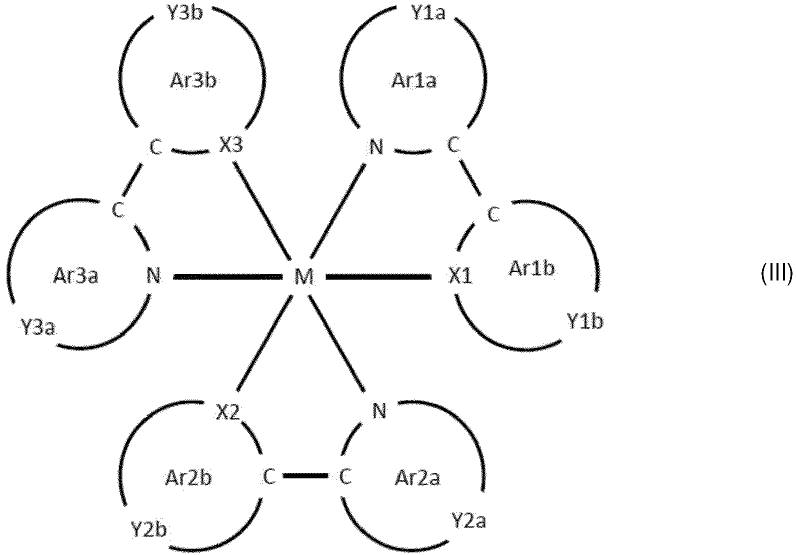
wobei
M wahlweise für Ruthenium oder Iridium steht,
N für Stickstoff steht,
C für Kohlenstoff steht,
X1, X2, X3 - im Weiteren auch kurz als X bezeichnet, wenn es auf die Unterscheidung nicht ankommt oder für diese Bausteine allgemeingültige Aussagen getroffen werden - jeweils wahlweise und unabhängig voneinander für Stickstoff (N) oder Kohlenstoff (C) stehen,
Y1a, Y1b, Y2a, Y2b, Y3a, Y3b - im Weiteren auch kurz als Y bezeichnet, wenn es auf die Unterscheidung nicht ankommt oder für diese Bausteine allgemeingültige Aussagen getroffen werden - jeweils wahlweise und unabhängig voneinander für Stickstoff (N) oder Kohlenstoff mit an diesen gebundenen Wasserstoff (CH) stehen,
   und wobei
Ar1a, Ar2a, Ar3a (in einem Kreis) jeweils für einen heteroaromatischen Sechsring (also heterocyclisch aromatischer Sechsring) stehen, wobei das jeweils eine Heteroatom oder gegebenenfalls die jeweils beiden Heteroatome Stickstoff (N) - und die übrigen Atome des Rings dementsprechend Kohlenstoff (C) - sind,
Ar1b, Ar2b, Ar3b (in einem Kreis) jeweils wahlweise und unabhängig voneinander für einen carbocyclischen aromatischen Sechsring oder für einen heterocyclischen aromatischen Sechsring stehen, wobei das gegebenenfalls eine Heteroatom oder die gegebenenfalls beiden Heteroatome jeweils Stickstoff (N) - und die übrigen Atome des Rings dementsprechend Kohlenstoff (C) -sind,
wobei Ar1a mit Ar1b, Ar2a mit Ar2b und Ar3a mit Ar3b jeweils über Kohlenstoff-Kohlenstoff-Bindungen (C-C) miteinander verknüpft sind, so dass sich jeweils ein hetero-biphenylisches Strukturelement ergibt.

Die Position und Lage der Atome (C, N, X (mit den jeweiligen Spezifizierungen), Y (mit den jeweiligen Spezifizierungen)) in den Cyclen Ar1a, Ar2a, Ar3a, Ar1b, Ar2b, Ar3b soll grundsätzlich durch die oben gewählte Darstellung nicht beschränkt sein, insbesondere bedeutet die gewählte Darstellung zunächst nur, dass die jeweils für den Ring angegebenen Atome in diesem auch vorhanden sind. Bevorzugt umfassen die Bicyclen jedoch die jeweilige Einheit N-C-C-X (mit X als Platzhalter für X1, X2 beziehungsweise X3), in denen die jeweiligen Atome benachbart sind und N-C und C-X Teile des jeweiligen aromatischen (konjugierten) Rings sind.

An die (nicht mit Buchstabensymbolen dargestellten) Kohlenstoffatome (C) in den Cyclen Ar1a, Ar2a, Ar3a, Ar1b, Ar2b, Ar3b kann - jeweils unabhängig voneinander - Wasserstoff gebunden sein, sie können jedoch auch substituiert sein, so dass sowohl die carbocyclischen als auch die heterocyclischen aromatischen Ringe (Ar1a, Ar1b, Ar2a, Ar2b, Ar3a, Ar3b) jeweils wahlweise und unabhängig voneinander nicht substituierte, einfach substituierte oder mehrfach substituierte Derivate der entsprechenden Sechsringe sind.

Mögliche Substituenten umfassen beispielweise Halogenylgruppen, Alkylgruppen, Arylgruppen, Heteroarylgruppen Halogenylalkylgruppen, Halogenylarylgruppen oder Halogenylheteroarylgruppen.

In einer bevorzugten Ausführung sind alle diese Substituenten zu Wasserstoff (H) gewählt. In einer weiteren bevorzugten Ausführung der Erfindung sind einzelne dieser Substituenten als Halogenatome gewählt, etwa als Fluor. So kann etwa beispielweise jeder der Cyclen Ar1a, Ar2a, Ar3a, Ar1b, Ar2b, Ar3b zwei Fluoratome als Substituenten tragen.

Einzelne der Substituenten können auch Brücken zu dem Nachbarring des jeweiligen Biphenyls darstellen, so dass sich eine Verbindung der allgemeine Formel (IV) ergibt: 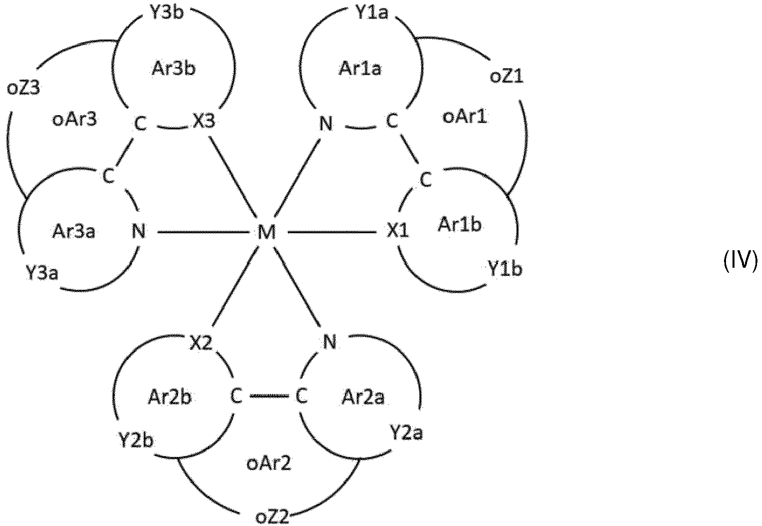
wobei die für Formel (I) beschriebenen Symbolerklärungen gelten und weiterhin oZ1, oZ2, oZ3 - im Weiteren auch kurz als oZ bezeichnet, wenn es auf die Unterscheidung nicht ankommt oder für diese Bausteine allgemeingültige Aussagen getroffen werden - jeweils derart optional vorhanden sind, dass zumindest eine dieser Gruppen - etwa oZ1 -, bevorzugt alle drei Gruppen exisitieren, und unabhängig voneinander jeweils zwei - ihrerseits jeweils Wasserstoff oder einen Substituenten tragende - benachbarte Kohlenstoffatome darstellen und jeweils Teil eines konjugierten Rings sind, so dass
oAr1, oAr2, oAr3 (in einem Kreis) jeweils entsprechend für - optionale, entsprechend der Existenz von oZ1, oZ2 und oZ3 - aromatische Sechsringe stehen, die zusammen mit dem jeweiligen hetero-biphenylischen Strukturelement jeweils zu einer tricyclischen heteroaromatischen Struktur kondensiert sind,
wobei die Kohlenstoffatome der Gruppen oZ1, oZ2, oZ3 wahlweise und unabhängig voneinander Wasserstoff (H) oder andere Substituenten - wie beispielweise Kohlenwasserstoffreste, Halogenatome - tragen, so dass die aromatischen Ringe oAr1, oAr2, oAr3, sofern existent, jeweils wahlweise und unabhängig voneinander nicht substituierte, einfach substituierte oder zweifach substituierte Derivate sind. Bevorzugt tragen beide Kohlenstoffatome der Gruppen oZ1, oZ2, oZ3 - soweit die jeweilige Gruppe existent ist - jeweils ein Wasserstoffatom.

Für die aromatischen Cyclen und die weiteren Substituenten der Cyclen gelten die für Formel (I) bereits gemachten Aussagen.

In einer bevorzugten erfindungsgemäßen Ausführungsform ist der Photoredox-Katalysator (c2) in Übergangsmetallkomplex mit Ruthenium als Zentralatom und Bipyridin oder ein einfach oder mehrfach substituiertes Bipyridin-Derivat als Liganden. In einer weiteren bevorzugten erfindungsgemäßen Ausführungsform ist der Photoredox-Katalysator (c2) ein Übergangsmetallkomplex mit Iridium als Zentralatom und Phenylpyridin oder ein einfach oder mehrfach substituiertes Phenylpyridin-Derivat als Liganden.

Viele der am häufigsten eingesetzten Photoredox-Katalysatoren sind Polypyridyl Übergangsmetallkomplexe, beispielsweise von Ruthenium, Kupfer und Iridium. Bevorzugt ist der mindestens eine Photoredox-Katalysator (c2) ausgewählt aus der Gruppe bestehend aus Ru(bpm)²⁺ (z.B. Tris(2,2'-bipyrimidine)ruthenium(II) dichlorid), Ru(bpz)₃²⁺ (z.B. Tris(2,2'-bipyrazine)ruthenium Bis(hexafluorophosphat)), Ru(bpy)₃²⁺, Ru(phen)₃²⁺ (z.B.Dichloro tris(1,10-phenanthrolin)ruthenium(II) chlorid), Ir[dF(CF₃)ppy]₂(dtbbpy)⁺ (z.B. [4,4'-Bis(1,1-dimethylethyl)-2,2'-bipyridin-*N*1,*N*1'] bis[3,5-difluor-2-[5-(trifluormethyl)-2-pyridinyl-*N*]phenyl-C]Iridium(III) Hexafluorphosphat), Ir(ppy)₂(dtbbpy)⁺ (z.B. [Ir(dtbbpy)(ppy)₂][PF₆]), jeweils plus ein Anion oder mehrere Anionen (bzw. Gegenion(en) des Kations), wie beispielsweise Chlorid oder Hexafluorophosphat, Ir(Fppy)₃ oder *fac*-Ir(ppy)₃ (*fac*-Tris(2-phenylpyridin)iridium(III)), Ir(ppy)₃, und dem Kupferkomplex Dichloro-(1,10-phenanthrolin)-kupfer(II) (CAS: 14783-09-6).

In einer besonders bevorzugten erfindungsgemäßen Ausführungsform ist der Photoredox-Katalysator (c2) ausgewählt aus:
i. [Tris(2,2'-bipyridyl)ruthenium(II)]²⁺, [Ru(bpy)₃]^{**2**+}: 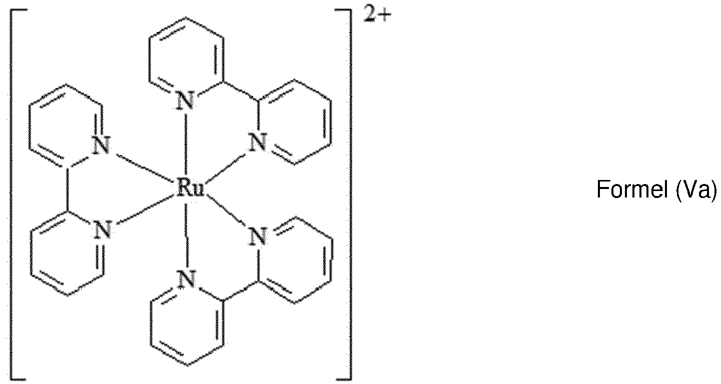
ii. Tris[2-(2,4-difluorophenyl)pyridin]iridium(III), Ir(Fppy)₃; CAS-Nr.: 387859-70-3: 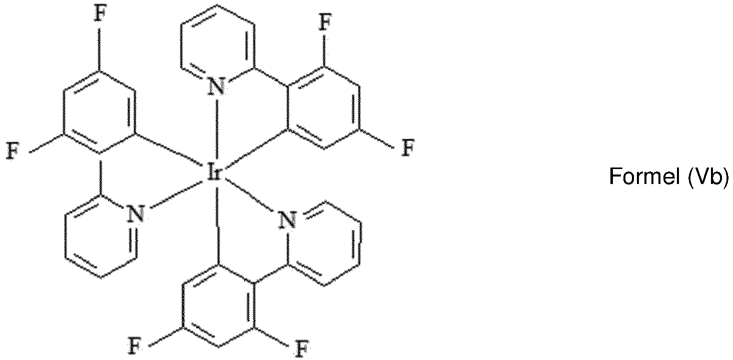
iii. Tris(2-phenylpyridinato)iridium(III), Ir(ppy)₃; CAS-Nr.: 94928-86-6:

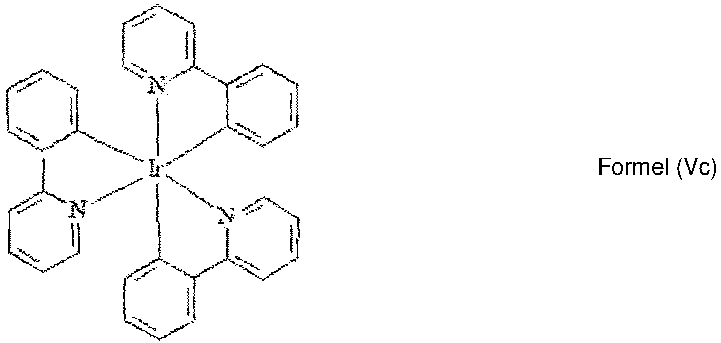

Das bevorzugte Anion bzw. Gegenion des Kations der Formel (Va) ist Chlorid. Das entsprechende kommerziell verfügbare Produkt enthält Kristallwasser.

Die besonders bevorzugte Ausführungsform des Photoredox-Katalysators der Formel (Va) ist somit Tris(2,2'-bipyridyl)ruthenium(II)chlorid Hexahydrat, (CAS-Nr.: 50525-27-4), erhältlich bei der Firma CHEMOS GmbH & Co. KG (Altdorf, Deutschland, http://www.chemos.de), ebenso wie der Photoredox-Katalysatoren der Formel (Vc). Der Photoredox-Katalysator mit der Formel (Vb) ist erhältlich bei der Firma Strem (Europe) (Bischheim, Frankreich, http://www.strem.com).

Der Anteil des Photoredox-Katalysators (c2) an der Reaktivklebemasse des erfindungsgemäßen reaktiven Haftklebebands liegt bevorzugt im Bereich bis etwa 1,0 Gew.-%, bevorzugter bis zu 0,5 Gew.-%, und besonders bevorzugt im Bereich von etwa 0,01 Gew.-% bis 0,1 Gew.-% Photoredox-Katalysator, jeweils bezogen auf 100 Gew.-% Basismasse. In einer bevorzugten Ausführungsform ist das erfindungsgemäße reaktive Haftklebeband dadurch gekennzeichnet, dass die mindestens eine Reaktivklebemasse den mindestens einen Radikalinitiator (c1) im Bereich von 0,1 Gew.-% bis 9 Gew.-%, bevorzugter von 0,1 Gew.-% bis 5 Gew.-% und besonders bevorzugt von 0,5 Gew.-% bis 2 Gew.-%, und den mindestens einen Photoredox-Katalysator (c2) im Bereich bis etwa 1,0 Gew.-%, bevorzugter im Bereich bis zu 0,5 Gew.-% und besonders bevorzugt im Bereich von etwa 0,01 Gew.-% bis 0,1 Gew.-% jeweils bezogen auf 100 Gew.-% Basismasse, umfasst.

In einer bevorzugten Ausführungsform ist das erfindungsgemäße reaktive Haftklebeband dadurch gekennzeichnet, dass das Initiatorsystem eine Offenzeit von mindestens 1 Minute, bevorzugt 2 Minuten und besonders bevorzugt von 5 Minuten aufweist.

In einer bevorzugten Ausführungsform ist das erfindungsgemäße reaktive Haftklebeband dadurch gekennzeichnet, dass die mindestens eine Reaktivklebemasse
eine Basismasse enthält, die (a) 10 Gew.-% bis 90 Gew.-% mindestens eines Poly(meth)acrylats, und (b) 10 Gew.-% bis 80 Gew.-% mindestens eines radikalisch polymerisierbaren Monomers oder Oligomers, jeweils bezogen auf das Gesamtgewicht der Basismasse, enthält
   und zudem
(c) 0,1 Gew.-% bis 10 Gew.-%, bezogen auf 100 Gew.-% der Basismasse, mindestens eines Initiatorsystems zur Aushärtung des mindestens einen radikalisch polymerisierbaren Monomers oder Oligomers, umfasst.

Bevorzugt ist es dadurch gekennzeichnet, dass die mindestens eine Reaktivklebemasse
eine Basismasse enthält, die (a) 20 Gew.-% bis 60 Gew.-% mindestens eines Poly(meth)acrylats, und (b) 20 Gew.-% bis 60 Gew.-% mindestens eines radikalisch polymerisierbaren Monomers oder Oligomers, jeweils bezogen auf das Gesamtgewicht der Basismasse, enthält
   und zudem
(c) 0,2 Gew.-% bis 5 Gew.-%, bezogen auf 100 Gew.-% der Basismasse, mindestens eines Initiatorsystem zur Aushärtung des mindestens einen radikalisch polymerisierbaren Monomeren oder Oligomeren, umfasst.

Insbesondere bevorzugt ist es dadurch gekennzeichnet, dass die mindestens eine Reaktivklebemasse eine Basismasse enthält, die (a) 40 Gew.-% bis 55 Gew.-% mindestens eines Poly(meth)acrylats, und (b) 35 Gew.-% bis 45 Gew.-%, mindestens eines radikalisch polymerisierbaren Monomers oder Oligomers, jeweils bezogen auf das Gesamtgewicht der Basismasse, enthält und zudem (c) 0,1 Gew.-% bis 2 Gew.-%, bezogen auf 100 Gew.-% der Basismasse, mindestens eines Initiatorsystems zur Aushärtung des mindestens einen radikalisch polymerisierbaren Monomers oder Oligomers, umfasst.

In einer Ausführungsform umfasst die Reaktivklebemasse des erfindungsgemäßen reaktiven Haftklebebands neben dem mindestens einen Poly(meth)acrylat aus den Monomeren (i) und (ii) noch ein weiteres Polymer oder mehrere weitere Polymere (d). Unter einem weiteren Polymer (d) wird im Rahmen der vorliegenden Erfindung eine polymere Verbindung mit einem Gewichtsmittel der Molekulargewichtsmittelverteilung Mw von 35.000 g/mol oder mehr, bestimmt gemäß GPC, verstanden.

Hierbei sind zur Einstellung des haftklebrigen Zustandes oder Verbesserung der adhäsiven Eigenschaften thermoplastische Polymere mit einer kristallinen Schmelztemperatur von kleiner als 100 °C und/oder einer Erweichungstemperatur von kleiner als 100 °C bevorzugt. In diesem Zusammenhang steht der Begriff Erweichungstemperatur für die Temperatur, ab der das thermoplastische Granulat mit sich selbst verklebt. Wenn es sich bei dem Polymer um ein semikristallines thermoplastisches Polymer handelt, dann weist es neben seiner Erweichungstemperatur (die mit dem Schmelzen der Kristallite zusammenhängt) sehr bevorzugt eine Glasübergangstemperatur von höchstens 25 °C, bevorzugt höchstens 0 °C, auf. Das weitere Polymer (d) kann oder die mehreren weiteren Polymere (d) können beispielsweise ausgewählt sein aus der Gruppe bestehend aus Polyurethan, Polyester bzw. Copolyester, Polyamid bzw. Copolyamid, Ethylen-Vinylacetat-Copolymer (EVA oder EVAC) und Polyvinylcaprolactam. Bevorzugt ist das weitere Polymer ein Polyurethan, insbesondere ein thermoplastisches Polyurethan.

Kommerziell erhältliche thermoplastisches Polyurethane sind zum Beispiel Desmocoll^{®} 530/1 und Desmocoll^{®} 540/3 sowie Desmomelt^{®} 530 von Covestro AG (Leverkusen, Deutschland) oder IROSTIC^{®} S-6558-06 und IROSTIC^{®} S 8612 von Huntsman (Huntsman Holland B.V., Botlek-Rotterdam, Niederlande) oder alternative Varianten aus diesen Produktlinien. Außerdem gibt es die Produktlinien Elastollan^{®} von BASF (Ludwigshafen, Deutschland) oder Pearlbond von Lubrizol (Lubrizol Advanced Materials Europe BVBA, Brüssel, Belgien). Vorzugsweise besitzt das thermoplastische Polyurethan eine Erweichungstemperatur von kleiner als 100 °C, insbesondere kleiner als 80 °C. Bevorzugte Beispiele für solche thermoplastische Polyurethane sind Desmomelt^{®} 530 und IROSTIC^{®} S-6558-06. Desmomelt^{®} 530 ist ein hydroxyl-terminiertes, weitgehend lineares, thermoplastisches, stark kristallisierendes Polyurethan-Elastomer. IROSTIC^{®} S-6558-06 ist laut Herstellerangabe ein lineares thermoplastisches Polyurethan für lösungsmittelbasierte Klebstoffe. Die Merkmale sind laut Herstellerangabe: sehr geringe Kristallisationsrate, lange offene Zeit, sehr niedrige Aktivierungstemperatur.

In diesem Fall ist das erfindungsgemäße reaktive Haftklebeband bevorzugt dadurch gekennzeichnet, dass die Basismasse der Reaktivklebemasse 1 Gew.-% bis 50 Gew.-%, bevorzugter 10 Gew.-% bis 40 Gew.-%, eines weiteren oder mehrerer weiterer Polymere (d), jeweils bezogen auf das Gesamtgewicht der Basismasse der Reaktivklebemasse, umfasst.

Gemäß bevorzugter Ausgestaltungen enthält die Basismasse der Reaktivklebemasse 10 Gew.-% bis 40 Gew.-%, ganz besonders bevorzugt 20 bis 40 Gew.-%, an weiteren Polymeren (d). Hierdurch weisen die Reaktivklebemasse und damit das erfindungsgemäße Klebeband eine optimale chemische Beständigkeit und gleichzeitig ein sehr gutes Eigenschaftsprofil im Hinblick auf weitere Anforderungen, wie insbesondere die Schockresistenz, auf.

Gemäß bevorzugter Ausgestaltungen sind als weiteres Polymer oder weitere Polymere Polyurethane oder Ethylenvinylacetat bevorzugt, wobei die Gesamtmenge dieser weiteren Polymere hierbei besonders bevorzugt 10 Gew.-% bis 40 Gew.-%, ganz besonders bevorzugt 20 bis 40 Gew.-%, beträgt. Hierdurch weisen die Reaktivklebemasse und damit das erfindungsgemäße Klebeband eine optimale chemische Beständigkeit und eine hohe Schockresistenz auf.

Gemäß weiterer bevorzugter Ausgestaltungen enthält die Basismasse der Reaktivklebemasse 10 Gew.-% bis 40 Gew.-%, ganz besonders bevorzugt 10 bis 20 Gew.-%, an weiteren Polymeren (d). Hierdurch weisen die Reaktivklebemasse und damit das erfindungsgemäße Klebeband eine optimale chemische Beständigkeit und optimierte Verklebungsfestigkeiten an verschiedenste Substrate auf. Gemäß bevorzugter Ausgestaltungen ist dabei insbesondere als weiteres Polymer Polyvinylcaprolactam bevorzugt.

Die genannten Gewichtsprozentangaben beziehen sich auf das weitere Polymer oder auf die Summe aller weiteren Polymere, falls zwei oder mehr Polymere vorliegen. Bevorzugt beträgt in der Reaktivklebemasse des erfindungsgemäßen reaktiven Haftklebebands das Gewichtsverhältnis der Gesamtheit der Poly(meth)acrylate zur Gesamtheit der weiteren Polymere 1:0,1 bis 1:3. Bei einem noch höheren Anteil eines weiteren oder von mehreren weiteren Polymeren lässt die chemischen Beständigkeit stark nach.

Die Reaktivklebemasse des erfindungsgemäßen reaktiven Haftklebebands kann gegebenenfalls weitere Additive und/oder Hilfsstoffe enthalten, die im Stand der Technik bekannt sind. Der Anteil der weiteren Additive und/oder Hilfsstoffe kann im Bereich von 0 Gew.-% bis etwa 20 Gew.-%, bevorzugt 0 Gew.-% bis etwa 15 Gew.-%, stärker bevorzugt 0 Gew.-% bis etwa 10 Gew.-%, und am stärksten bevorzugt 0 Gew.-% bis etwa 5 Gew.-% liegen, jeweils bezogen auf 100 Gew.-% der Basismasse.

Als weitere Additive und/oder Hilfsstoffe sind beispielsweise Füllstoffe, Farbstoffe, Keimbildner, rheologische Additive (zum Beispiel pyrogene Kieselsäure), Blähmittel, klebverstärkende Additive (Haftvermittler, insbesondere Silane und Tackifier-Harze), Compoundierungsmittel, Weichmacher und/oder Alterungs-, Licht- und UV-Schutzmittel, zum Beispiel in Form von primären und sekundären Antioxidantien zu nennen.

Insbesondere und gemäß bevorzugter Ausführungsformen beträgt der Anteil an Füllstoffen, wie beispielsweise Glaskugeln oder SiLibeads^{®} 5211, bis zu 50 Gew.-%, insbesondere bis zu 40 Gew.-%, bezogen auf 100 Gew.-% der Basismasse.

Gemäß bevorzugter Ausführungsformen enthält die Reaktivklebemasse wenigstens einen rheologie-modifizierenden Füllstoff, wie insbesondere Kieselsäure, und zwar bevorzugt in einer Menge von 1 bis 10 Gew.-%, besonders bevorzugt 2 bis 5 Gew.-%, bezogen auf 100 Gewichtsprozent der Basismasse.

Insbesondere bevorzugte Additive sind Silan-Haftvermittler. Als Silan-Haftvermittler ist zum Beispiel 3-Trimethoxysilylpropylmethacrylat (CAS-Nr.: 2530-85-0) zu nennen, erhältlich unter dem Handelsnamen Dynasylan^{®} MEMO (Evonik AG, Essen, Deutschland).

Das erfindungsgemäße reaktive Haftklebeband umfasst mindestens eine Reaktivklebemasse. In einer bevorzugten Ausführungsform liegt die mindestens eine Reaktivklebemasse als Klebeschicht vor. In diesem Fall betrifft das erfindungsgemäße reaktive Haftklebeband ein Klebeband bzw. Klebefilm ohne Trägerschicht, also als ein trägerloses (geschäumte und ungeschäumte) reaktives Transferhaftklebeband. In einer bevorzugten Ausführungsform ist das reaktive Haftklebeband dadurch gekennzeichnet, dass das Haftklebeband neben der Klebeschicht noch eine Trägerschicht umfasst. Dies beinhaltet einseitige Klebebänder als auch doppelseitige Klebebänder umfassend mindestens eine äußere Schicht bestehend aus der erfindungsgemäßen Reaktivklebemasse, wie in den Ansprüchen definiert.

Der Begriff Klebeband ist für den Fachmann im Bereich der Klebetechnik klar. Im Rahmen der vorliegenden Erfindung bezeichnet der Ausdruck Band alle dünnen, flächigen Gebilde, d.h. Gebilde mit einer überwiegenden Ausdehnung in zwei Dimensionen, insbesondere Folien, Folienabschnitte und Etiketten, bevorzugt Bänder mit ausgedehnter Länge und begrenzter Breite sowie entsprechende Bandabschnitte.

Die Trägerschicht bezeichnet zumeist die Schicht eines solchen mehrschichtigen Klebebandes, die die mechanischen und physikalischen Eigenschaften des Klebebandes, wie beispielsweise die Reißfestigkeit, Dehnbarkeit, Isolations- oder Rückstellvermögen, maßgeblich bestimmt. Übliche Trägermaterialien sind dem Fachmann geläufig und sind beispielsweise Gewebe, Gelege und Kunststofffolien, zum Beispiel PET-Folien und Polyolefin-Folien. Die Trägerschicht kann jedoch auch selbst haftklebrig sein.

In den erfindungsgemäßen reaktiven Haftklebebändern können die Klebeschichten mit einem sogenannten Releaseliner für Transport, Lagerung oder Stanzung abgedeckt sein. Dieser Releaseliner ermöglicht zum Beispiel ein problemloses Abwickeln und schützt die Haftklebemasse vor Verschmutzung. Solche Releaseliner bestehen üblicherweise aus einer ein- oder beidseitig silikonisierten Kunststofffolie (z.B. PET oder PP) oder einem silikonisierten Papierträger. Es ist beispielsweise möglich, dass das Haftklebeband weitere Filme, Folien, Schichten, Träger, Klebstofffilme, Haftklebstofffilme, Trennpapiere und/oder Trennliner umfasst.

Die Schichtdicke der Klebeschicht aus der Reaktivklebemasse im erfindungsgemäßen reaktiven Haftklebeband beträgt bevorzugt 5 µm bis 400 µm (gemessen mit einem handelsüblichen Dickenmessgerät, z.B. DM 2000 der Firma Wolf Messtechnik GmbH). Bevorzugter ist eine Schichtdicke von 10 µm bis 300 µm, noch bevorzugter ist eine Schichtdicke von 30 µm bis 200 µm und am stärksten bevorzugt ist eine Schichtdicke von 50 µm bis 110 µm. Höhere Schichtdicken, z.B. von bis zu 1000 µm, sind denkbar und mit der Reaktivklebemasse der vorliegenden Erfindung realisierbar. Dies ist vor allem der Fall, wenn Bauteile mit größeren Spaltmaßen verbaut werden. Bevorzugte Schichtdicken sind hier bis zu 1000 µm, bevorzugter bis zu 900 µm und stärker bevorzugter von bis zu 800 µm. Häufig werden solche Klebebänder zur Sicherstellung der inneren Festigkeit vor Aushärtung mit einer Trägerschicht im Inneren versehen, sodass in Ausnahmen eine beidseitige Aktivierung nötig werden kann.

Offenbart wird ausgehend vom erfindungsgemäßen reaktiven Haftklebeband zudem ein Verfahren zur Herstellung des erfindungsgemäßen reaktiven Haftklebebandes sowie die Verwendung des erfindungsgemäßen reaktiven Haftklebebandes zur Verklebung von zwei oder mehr Komponenten bzw. Substraten, bevorzugt bei Raumtemperatur, durch Aushärtung der Reaktivklebemasse.

Die Herstellung des erfindungsgemäßen reaktiven Haftklebeband erfolgt spätestens ab der Zugabe des Initiatorsystems, insbesondere des Photoredox-Katalysators, unter Ausschluss von UV-Licht oder sichtbarem Licht der Wellenlänge, durch die das jeweilige Initiatorsystem, bzw. der jeweilige Photoredox-Katalysator, angeregt wird, insbesondere Violett- und Blaulicht. In der Regel sind dies Wellenlängen von kleiner 500 nm. Der Ausschluss kann in der Regel mit handelsüblichen Gelblichtleuchten sowie durch Abdeckung normaler Lichtquellen, die UV-Anteile und/ oder Violett- und Blaulichtanteile in ihrem Wellenlängenspektrum haben, mit handelsüblichen UV-Schutz- Gelblichtfolien erreicht werden.

Das erfindungsgemäße, reaktive Haftklebeband wird durch die nachfolgend beschriebenen Verfahren hergestellt:
In einem ersten Schritt werden die Inhaltsstoffe (Bestandteile) in einem oder mehreren Lösemittel(n) und/oder Wasser gelöst bzw. fein verteilt. Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt sind Aceton und Methylethylketon (MEK).

Wie hierin verwendet, umfasst der Begriff Inhaltsstoff (a) mindestens ein Poly(meth)acrylat, (b) mindestens ein radikalisch polymerisierbares Monomer oder Oligomer, und (c) mindestens ein Initiatorsystem zur Aushärtung des mindestens einen radikalisch polymerisierbaren Monomers oder Oligomers, und ggf. (d) mindestens ein weiteres Polymer, wie oben definiert.

Anschließend werden die aufgelösten oder fein verteilten Inhaltsstoffe in einem zweiten Schritt mit üblichen Rührgeräten gemischt. Gegebenenfalls werden die Inhaltsstoffe gleichzeitig aufgelöst, feinverteilt und gemischt.

Daraufhin wird in einem dritten Schritt ein Film, eine Folie, eine Schicht, ein Träger, ein Klebstofffilm, ein Haftklebstofffilm, bevorzugt ein Trennliner oder ein Trennpapier mit der Mischung der aufgelösten, fein verteilten Inhaltsstoffe beschichtet. Die Beschichtung erfolgt nach den üblichen Techniken, die im Stand der Technik bekannt sind.

Nach der Beschichtung wird das Lösemittel in einem vierten Schritt durch Abdampfen entfernt. Dies erfolgt abhängig von den verwendeten Lösemitteln bevorzugt im Temperaturbereich von 60 °C bis 80 °C.

Gegebenenfalls kann der reaktive Klebstofffilm bzw. das erfindungsgemäße reaktive Haftklebeband in einem weiteren Schritt zu einer Rolle aufgewickelt werden.

Zur Lagerung wird das erfindungsgemäße, reaktive Haftklebeband mit einem Trennliner oder -papier abgedeckt.

Das erfindungsgemäße Verfahren zur Verklebung zweier Substrate, bevorzugt bei Raumtemperatur, unter Verwendung des erfindungsgemäßen reaktiven Haftklebebandes umfasst die folgenden Schritte
A) Aufbringen des reaktiven Haftklebebands auf ein erstes Substrat
B) Aktivierung des reaktiven Haftklebebands durch Bestrahlung mit UV-Licht oder Blaulicht, wobei Blaulicht insbesondere und beispielsweise eine Wellenlänge von 460 nm aufweist, bevorzugt durch Bestrahlung von einer UV-LED Lampe.
C) Fügen eines zweiten Substrates auf das reaktive Haftklebeband.

Die Aktivierung gemäß Schritt B) kann dabei zeitlich vor dem Schritt A) erfolgen oder im Anschluss daran.

Bevorzugt erfolgt die Aktivierung gemäß Schritt B) zeitlich vor dem Schritt C), insbesondere wenn eine Aktivierung durch das erste und zweite Substrat hindurch nicht möglich ist.

Bevorzugt wird in diesem Verfahren, insbesondere bei der Durchführung im industriellen Maßstab, mit einer Wellenlänge von 365 nm oder 385 nm, bevorzugter mit 365 nm, bestrahlt.

Ebenso bevorzugt kann die Bestrahlung auch mit einer 460 nm LED-Strahlungsquelle erfolgen. Die Ergebnisse, die mittels Bestrahlung mit 460 nm-Licht erzielt werden, sind repräsentativ für die Bestrahlung mit Licht einer Wellenlänge von 365 nm oder 385 nm.

Entsprechende UV-LED Lampen sind im Fachhandel erhältlich, zum Beispiel der LED Cube der Firma Hönle (Dr. Hönle AG, Gilching, Deutschland). Weiterhin kann das erfindungsgemäße Verfahren dadurch gekennzeichnet werden, dass die Aktivierung weniger als 45 Sekunden, bevorzugt weniger als 30 Sekunden, bevorzugter weniger als 15 Sekunden, noch bevorzugter weniger als 10 Sekunden, insbesondere weniger als 7 Sekunden. Insbesondere hat sich in diesem Verfahren eine Aktivierungs- / Bestrahlungszeit von weniger als 15 Sekunden oder 10 Sekunden als hervorragend geeignet herausgestellt und diese sind besonders vorteilhaft, weil sehr kurze Taktzeiten im industriellen Prozess ermöglichen.

Ein weiterer Gegenstand der Erfindung ist die Verwendung des erfindungsgemäßen reaktiven Haftklebebandes als Klebemittel in der Herstellung elektronischer, optischer oder feinmechanischer Geräte, insbesondere portabler elektronischer, optischer oder feinmechanischer Geräte.

Bevorzugt ist die Verwendung des erfindungsgemäßen reaktiven Haftklebebandes zur Herstellung von Verklebungen auf Materialien ausgewählt aus Kunststoff, Metall, Glas oder Keramik und die Verwendung des erfindungsgemäßen reaktiven Haftklebebandes als Klebemittel in der Herstellung elektronischer, optischer oder feinmechanischer Geräte.

Derartige portable Geräte sind insbesondere:
Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems;
Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads");
Monitore, Displays, Bildschirme, berührungsempfindliche Bildschirme (Sensorbildschirme, "Touchscreen-Geräte"), Beamer;
Lesegeräte für elektronische Bücher ("E-Books");
Kleinfernsehgeräte, Taschenfernseher, Filmabspielgeräte, Videoabspielgeräte Radios (auch Klein- und Taschenrundfunkgeräte), Walkmen, Discmen, Musikabspielgeräte für zum Beispiel CD, DVD, Bluray, Kassetten, USB, MP3, Kopfhörer Schnurlose Telefone, Mobiltelefone, Smartphones, Funksprechgeräte, Freisprechgeräte, Personenrufgeräte (Pager, Pieper);
Mobile Defibrillatoren, Blutzuckermessgeräte, Blutdruckmessgeräte, Schrittzähler, Pulsmesser;
Taschenlampen, Laserpointer;
Mobile Detektoren, optische Vergrößerungsgeräte, Fernsichtgeräte, Nachtsichtgeräte, GPS-Geräte, Navigationsgeräte, tragbare Schnittstellengeräte der Satellitenkommunikation;
Datenspeichergeräte (USB-Sticks, externe Festplatten, Speicherkarten); und Armbanduhren, Digitaluhren, Taschenuhren, Kettenuhren, Stoppuhren.

### Experimenteller Teil:

### A. Verwendete Rohstoffe:

| | |
|---|---|
| 2-Phenoxyethylacrylat (PEA) | CAS Nr. 48145-04-6, Monomer Poly(meth)acrylat, BASF |
| Methylmethacrylat (MMA) | CAS Nr. 80-62-6, Monomer Poly(meth)acrylat, Sigma-Aldrich |
| N-Vinylcaprolactam (NVC) | CAS-Nr.: 2235-00-9, Monomer Poly(meth)acrylat, Sigma-Aldrich |
| n-Butylacrylat (BA) | CAS Nr. 141-32-2, Monomer Poly(meth)acrylat, BASF |
| Ethylacrylat (EA) | CAS-Nr.: 140-88-5, Monomer Poly(meth)acrylat, Sigma-Aldrich |
| Acrylsäure (AS) | CAS-Nr.: 79-10-7, Monomer Poly(meth)acrylat, BASF |
| Vazo^{®} 67 | CAS Nr. 13472-08-7, 2,2'-Azobis(2-methylbutryro-nitril), Polymerisationsinitiator, Akzo Nobel |
| N-Vinylcaprolactam | CAS-Nr.: 2235-00-9, Monomer von Poly(N-Vinylcaprolactam), Sigma-Aldrich |
| Di(4-tert-5-butylcyclohexyl)peroxy-dicarbonat | CAS Nr. 15520-11-3, Polymerisationsinitiator, Akzo Nobel |
| Irostic^{®} S-6558-06 | Polymer, lineares Polyurethan mit sehr geringer Kristallisationsrate, Huntsman Holland B.V. |
| 2-Hydroxy-3-phenoxypropylacrylat (HPPA) | CAS-Nr.: 16969-10-1, radikalisch polymerisierbares Monomer, Sigma-Aldrich |
| Peroxan^{®} IHP-50 | 50 gewichtsprozentige Lösung von Diisopropylhydroperoxid (CAS-Nr.: 26762-93-6) in Diisopropylbenzol, Radikalinitiator, Pergan GmbH |
| Ru(bpy)₃ Cl₂ / Tris(2,2'-bipyridyl) ruthenium(II)chlorid | als Hexahdyrat; Tris(2,2'-bipyridyl) ruthenium(II) chlorid Hexahydrat, Ru(bpy)₃Cl₂ • 6H₂O; CAS-Nr.: 50525-27-4, Photoredox-Katalysator, Chemos GmbH |
| Aerosil^{®} R202 | CAS-Nr.: 7631-86-9, hydrophobierte pyrogene Kieselsäure, Evonik AG |

### B. Herstellung der Poly(meth)acrylate:

**Tabelle 1 - Zusammensetzung der Poly(meth)acrylate und Vergleichspolymere**

| **Name** | **Monomerzusammensetzung** | **Gesamtanteil der Monomere (i)** | **Molekulargewicht M_{w} [g/mol]** |
|---|---|---|---|
| P1 | 69 Gew.-% PEA | 69 % | |
| | 31 Gew.-% MMA | | |
| P2 | 90 Gew.-% PEA | 90% | |
| | 10 Gew.-% NVC | | |
| P3 | 29 Gew.-% PEA | 29% | |
| | 51 Gew.-% BA | | |
| | 20 Gew.-% MA | | |
| VP1 | 67 Gew.-% BA | 0 % | |
| | 30 Gew.-% EA | | |
| | 3 Gew.-% AS | | |

Die Polymere P1 bis P3 sowie VP1 wurden folgendermaßen hergestellt.

Ein für radikalische Polymerisationen konventioneller 4 L-Reaktor wurde mit 320 g der in Tabelle 1 angegebenen Mischung aus Monomeren sowie 273 g Ethylacetat/Isopropanol (96/04) befüllt. Nach 45-minütiger Durchleitung von Stickstoffgas unter Rühren wurde der Reaktor auf 58 °C hochgeheizt und 0,2 g Vazo^{®} 67 (2,2'-Azobis(2-methylbutryronitril)) hinzugegeben. Weitere 480 g der in Tabelle 1 angegebenen Monomermischung und 377 g Ethylacetat wurden 2 Stunden lang kontinuierlich zugegeben. Anschließend wurde das äußere Heizbad auf 65 °C erwärmt und die Reaktion konstant bei dieser Außentemperatur durchgeführt. Nach 1 h und nach 1,5 h Reaktionszeit wurden jeweils 0,3 g und 0.3 g 2,2'-Azobis(2-methylbutryonitril) hinzugegeben. Zur Reduktion der Restmonomeren wurden nach 6 h und nach 7,5 h jeweils 0,12 g Di(4-tert-5-butylcyclohexyl)peroxydicarbonat hinzugegeben. Es wurde einmal nach 2 h und 4 h mit 160 g Ethyl Acetat verdünnt. Die Reaktion wurde nach 24 h Reaktionszeit abgebrochen und auf Raumtemperatur abgekühlt.

### C. Herstellung Poly(N-Vinylcaprolactam) - Lösung:

Ein für radikalische Polymerisationen konventioneller 10 L-Glasreaktor wurde mit 4,0 kg N-Vinylcaprolactam, 3,84 kg Aceton und 0,16 kg Isopropanol befüllt. Unter Durchleitung von Stickstoffgas wurde der Reaktor unter Rühren (70 U/min) auf 65 °C Manteltemperatur geheizt. Bei Erreichen von 58 °C Innentemperatur wurden 2,0 g Vazo^{®} 67 zugegeben. Nach einer Stunde weiterem Rühren bei 65 °C Manteltemperatur wurden weitere 2,0 g Vazo^{®} 67 zugegeben. Nach 6 Stunden weiterem Rühren bei 65 °C Manteltemperatur wurde die Drehzahl des Rührers auf 35 U/min herabgesetzt. Die Reaktionszeit betrug 20 Stunden. Nach dieser Zeit wurde die Lösung auf Raumtemperatur abgekühlt und mit Aceton auf einen Feststoffgehalt von 40,0 Gewichtsprozent verdünnt. Die Molmasse des erhaltenen Poly(N-Vinylcaprolactams) wurde mittels thermischer Feldfluss-Fraktionierung bestimmt, da die Bestimmung mittels GPC nicht möglich war. Die Kalibrierung erfolgt auf dem Fachmann bekannte Weise. Ergebnis: Mₙ = 74.000 g/mol, M_{w} = 116.500 g/mol. Die Angabe in Tabelle 2 bezieht sich auf das Polymer als Feststoff.

### D. Herstellung der Reaktivklebemasse:

Die Herstellung der Reaktivklebemassen erfolgte im Labor gemäß den Mengenangaben in der untenstehenden Tabelle 2. Zu dem in Lösungsmittel vorliegenden Polymer wurden die Epoxidverbindungen und im Anschluss daran wurde der Photoinitiator mittels Rührens zugegeben. Wurden kommerzielle Polymere eingesetzt, so wurden diese als 40%-ige Lösung in Butanon angesetzt.

**Tabelle 2 - Zusammensetzungen der erfindungsgemäßen Reaktivklebemassen K1 bis K4 und der Vergleichs-Reaktivklebemassen V1 und V2 (alle Angaben in Gewichtsteilen):**

| **Komponenten** | **K1** | **K2** | **K3** | **K4** | **V1** | **V2** |
|---|---|---|---|---|---|---|
| **Basismasse** | | | | | | |
| P1 | 58,7 | | 16 | | | |
| P2 | | 58,7 | | | | |
| P3 | | | | 42,7 | | |
| Irostic^{®} S-6558-06 (PU) | | | 42,7 | | 42,7 | |
| Poly(N-Vinylcaprolactam) | | | | 16 | 16 | 15 |
| VP1 | | | | | | 55 |
| HPPA | 41,3 | 41,3 | 41,3 | 41,3 | 41,3 | 30 |

| **Initiatorsystem** | | | | | | |
|---|---|---|---|---|---|---|
| Peroxan^{®} IHP-50 | 2,5 | 2,5 | 2,5 | 2,5 | 2,5 | 2,5 |
| Ru(bpy)₃ Cl₂ | 0,03 | 0,03 | 0,03 | 0,03 | 0,03 | 0,03 |

| **Füllstoff** | | | | | | |
|---|---|---|---|---|---|---|
| Aerosil^{®} R202 | 4 | 4 | 4 | 4 | 4 | 4 |

### E. Herstellung der reaktiven Haftklebebänder:

Zur Herstellung der reaktiven Klebemasseschichten, also der trägerlosen Haftklebebänder, wurden die verschiedenen reaktiven Klebemassen aus einer Lösung auf einen konventionellen Liner (silikonisierte Polyesterfolie) mittels eines Laborstreichgeräts aufgebracht und getrocknet. Die Größe der Klebemassenschicht betrug ungefähr 21 cm x 30 cm und die Klebmassenschichtdicke nach dem Trocknen beträgt 100 ± 5 µm. Die Trocknung erfolgte jeweils zunächst bei RT für 15 Minuten und 15 Minuten bei 120 °C in einem Labortrockenschrank. Die getrockneten Klebemasseschichten wurden jeweils unverzüglich nach dem Trocknen mit einem zweiten Liner (silikonisierte Polyesterfolie mit geringerer Trennkraft) auf der offenen Seite laminiert.

### F. Prüfmethoden und Test-Ergebnisse

### Push-Out (PC-PC) - initial:

Der Push-Out-Test ermöglicht Aussagen über die Verklebungsfestigkeit eines Klebeprodukts in Richtung der Klebschichtnormalen. Bereitgestellt werden ein kreisförmiges erstes Substrat (1) (Polycarbonat, Macrolon 099, Dicke 3 mm) mit Durchmesser 21 mm, ein quadratisches zweites Substrat (2) (Polycarbonat, Macrolon 099, Dicke 3 mm) mit 40 mm Seitenlänge - mit einer kreisförmigen, zentral angeordneten Öffnung (Bohrung) von 9 mm Durchmesser, sowie die zu untersuchenden Klebefilmprobe, die ringförmig mit einem Außendurchmesser von 18 mm und einem Innendurchmesser von 13 mm gestanzt wurde, so dass ein Ring mit einer Stegbreite von 5 mm entstand.

Aus den vorgenannten drei Bauteilen wird ein Prüfkörper hergestellt, indem das Klebeprodukt mit der freien Oberfläche mittig auf das Substrat (1) verklebt wird. Dann wird die temporäre Schutzfolie (silikonisierter PET-Liner) entfernt und mit mindestens 50 J/cm² mit einer Blaulicht LED (LED Spot 100 HP IC 460 nm der Hönle AG) bestrahlt. Die Aktivierung kann stattdessen auch mit einer 365 nm UV-LED (Hönle AG) erfolgen.

Dieser Verbund wird mit der nun freiliegenden Seite des Klebeproduktes innerhalb von 2 Minuten auf das Substrat (2) konzentrisch appliziert, also derart, dass die kreisrunde Aussparung des Substrats (2) genau mittig über dem kreisrunden ersten Substrat 1 angeordnet ist (Verklebungsfläche ist somit 151 mm²) und mit einem Druck von mindestens 3 bar für mindestens 30 Sekunden verpresst, wobei der Prüfkörper entsteht.

Nach dem Verpressen werden die Prüfkörper für 72 Stunden bei 23 °C / 50 % relativer Feuchte (r.F.) konditioniert. Nach der Lagerung wird der Klebeverbund in eine Probenhalterung gespannt, so dass der Verbund waagerecht ausgerichtet ist. Der Prüfkörper wird mit der Polycarbonatscheibe (Substrat (1)) nach unten in die Probenhalterung eingelegt und in einer Zwick [Z020] die Verklebungsfestigkeit gemessen. Dazu wird ein Stahlstempel mit einem Durchmesser von 7 mm durch die kreisförmige Öffnung in Substrat (2) gefahren und die Kraft bestimmt, die benötigt wird das kreisförmige Substrat (1) vom quadratischen Substrat (2) zu trennen. Als Ausgabewert wird die bestimmte Kraft durch die Verklebungsfläche geteilt und die Kraft in MPa angegeben.

Es werden drei Proben pro Produkt getestet und der Mittelwert als Kennzahl für die Verklebungsfestigkeit angegeben.

### Push-Out (PC-PC) - nach 72h bei 65°C in Isopropanol/Wasser:

Zur Bestimmung der chemischen Beständigkeit der Verklebung wurden Push-Out Prüfkörper, die wie weiter oben beschrieben, aufgebaut sind, für 72 h in ein 65 °C warmes Bad aus Isopropanol/Wasser (70/30, d.h. 70 % Volumenanteile zu 30 % Volumenanteile) gelegt. Nach der Entnahme wurden die Testkörper bei 23 °C und 50 % r.F. für eine Stunde reklimatisiert. Danach erfolgte die Messung der Verklebungsfestigkeit, wie unter Push-Out - initial beschrieben.

Zur Bestimmung der Verklebungsfestigkeit auf SUS wurden als Substrat (1) eine 3 mm dicke kreisrunde Stahlscheibe (Durchmesser 21 mm) und als Substrat (2) ein 2 mm dickes quadratförmiges Stahlsubstrat mit 40 mm Seitenlänge und mit einer kreisförmigen, zentral angeordneten Öffnung (Bohrung) von 9 mm Durchmesser gewählt. Die Stahlsubstrate sind aus VA-1.4301 Stahl (einseitig spiegelpoliert).

### Klebkraft (auf Stahl):

Die Klebkraft wird hierbei auf Stahl analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 µm verwendet, wie sie von der Firma Coveme (Italien) erhältlich ist. Die Verklebung eines 2 cm breiten Messstreifens wird dabei mittels einer Anrollmaschine mit 4 kg bei einer Temperatur von 23 °C vorgenommen. Das Klebeband wird sofort nach der Applikation abgezogen. Der Messwert (in N/cm) ergibt sich als Mittelwert aus drei Einzelmessungen.

### Molekulargewicht Mₙ, M_{w}

Die Angaben des zahlenmittleren Molekulargewichts Mₙ bzw. gewichtsmittleren Molekulargewichts M_{w} in dieser Schrift beziehen sich auf die Bestimmung per Gelpermeationschromatographie (GPC). Die Bestimmung erfolgt an 100 µl klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 µm, 10³ Ä, 8,0 mm * 50 mm (Angaben hier und im Folgenden in der Reihenfolge: Typ, Partikelgrösse, Porosität, Innendurchmesser * Länge; 1 Ä = 10⁻¹⁰ m) verwendet. Zur Auftrennung wird eine Kombination der Säulen des Typs PSS-SDV, 5 µm, 10³ Ä sowie 10⁵ Ä und 10⁶ Ä mit jeweils 8,0 mm * 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt bei Polyacrylaten und polaren Molekülen, wie zum Beispiel Polyurethan, gegen PMMA-Standards (Polymethylmethacrylat-Kalibrierung). Die Kalibrierung wird mittels des kommerziell verfügbaren ReadyCal-Kits Poly(styrene) high der Firma PSS Polymer Standard Service GmbH, Mainz, durchgeführt. Diese wird anhand der Mark-Houwink-Parameter K und alpha universell in Polymethylmethacrylat (PMMA) umgerechnet, so dass die Angabe der Daten in PMMA-Massenäquivalenten erfolgt. Bei anderen Molekülen erfolgt die Kalibrierung gegen PS-Standards (Polystyrol-Kalibrierung)

**Tabelle 3 - Ergebnisse Push-Out und Klebkraft**

| **Test** | **K1** | **K2** | **K3** | **K4** | **V1** | **V2** |
|---|---|---|---|---|---|---|
| Push-Out (PC-PC) - initial [MPa] | 4,4 | 3,0 | 3,1 | 2,1 | 6,3 | 1,0 |
| Push-Out (SUS-SUS) - initial [MPa] | 12,7 | 8,1 | 2,8 | 6,9 | 8,9 | 2,2 |
| Push-Out (PC-PC) - nach 72h @65°C in Isopropanol/Wasser [MPa] | 0,3 | 0,5 | 0,1 | 0,05 | *n.b.2* | *n.b.2* |
| Push-Out (PC-PC) - nach 72h @65°C in Isopropanol/Wasser Bestanden: Ja oder Nein | Ja | Ja | Ja | Ja | Nein | Nein |
| Klebkraft Stahl | AF, >1 N/cm | AF, >1 N/cm | AF, >1 N/cm | AF, >1 N/cm | AF, >1 N/cm | AF, >1 N/cm |

| | | | | | | |
|---|---|---|---|---|---|---|
| *AF* = *adhäsives Versagen;* *n.b.2* = *Die Verklebung löste sich entweder bereits nach 48 Stunden Lagerzeit in Isopropanol*/*Wasser auf oder bei der Vorbereitung der Proben für die Push-Out Tests. Daher kann der Push-Out Test nach 72 Stunden Lagerung in Isopropanol*/ *Wasser nicht durchgeführt werden.* | | | | | | |

Alle erfindungsgemäße Klebemassen K1 bis K4 zeigen hervorragende initiale Verklebungsfestigkeiten (Push-Out PC-PC und SUS-SUS). Auch nach Immersion in einer Mischung aus Isopropanol und Wasser für 72 Stunden sind die Verklebungsfestigkeiten (bei PC-PC) noch ausreichend hoch bzw. ausgezeichnet, so dass die erfindungsgemäßen Klebemassen K1 bis K4 ein gute bis sehr gut chemische Beständigkeit aufweisen.

Auch ein Wert von 0,1 MPa der K3 ist vorliegend eine ausreichende Verklebungsfestigkeit und belegt die chemische Beständigkeit des Beispiels K3. Dem Fachmann ist bewusst, dass im Stand der Technik keine reaktiven Haftklebmassen bekannt sind, die eine so harsche Lagerungsbedingung bei 65°C für 72h in Isopropanol und Wasser besteht.

Bestanden ist der Push-Out Test nach 72 Stunden Lagerung in Isopropanol / Wasser, wenn die Verklebung diese Lagerbedingung überlebt und messbare Werte von > 0,01 MPa erhalten werden.

Die Vergleichsklebmasse V1 wies zwar eine akzeptable initiale Verklebungsfestigkeit im Push-Out Test auf, jedoch zeigte sie keine chemische Beständigkeit, da sich die Verklebung bereits während der Immersionszeit in der Mischung aus Isopropanol und Wasser oder spätestens bei der Probenvorbereitung der Push-Out Tests nach der Entnahme aus der Mischung lösten. Die Vergleichsmasse V2 zeigte auf PC-PC schlechte initiale Verklebungsfestigkeiten. Bei V2 löste sich zudem die Verklebung ebenfalls bereits während der Immersionszeit in der Mischung aus Isopropanol und Wasser bzw. bei der Probenvorbereitung der Push-Out Tests nach der Entnahme aus der Mischung, so dass auch V2 keine ausreichend gute chemische Beständigkeit aufwies. K4 zeigt überraschend, dass selbst Polymere mit niedrigen Phenylgruppenanteilen in Kombination mit dem radikalisch polymerisierbaren Monomeren dazu führen, dass eine Klebmasse im Vergleich zu V2 ohne Phenylgruppen oder V1 den harschen chemische Beständigkeitstest besteht. Mit steigendem Phenylgruppenanteil lassen sich auch die Messwerte nach der harschen Lagerung weiter verbessern (K1, K2).

## Patentansprüche

1. Reaktives Haftklebeband umfassend mindestens eine Reaktivklebemasse enthaltend eine Basismasse, wobei die Basismasse
(a) mindestens ein Poly(meth)acrylat, und
(b) mindestens ein radikalisch polymerisierbares Monomer oder Oligomer,
enthält,
und wobei die Reaktivklebemasse zusätzlich
(c) mindestens ein Initiatorsystem zur Aushärtung des mindestens einen radikalisch polymerisierbaren Monomers oder Oligomers, umfasst,
**dadurch gekennzeichnet, dass**
das Poly(meth)acrylat auf eine Monomerzusammensetzung zurückzuführen ist, die
(i) 15 Gew.-% bis 100 Gew.-% eines oder mehrere Monomere ausgewählt aus der Gruppe bestehend aus
a. einem oder mehreren Monomeren der Formel (I) 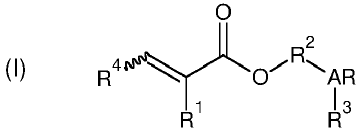
worin R¹ für ein Wasserstoffatom oder eine Methylgruppe,
R² für eine unsubstituierte, lineare oder verzweigte C₁-C₂₂-Alkylkette,
AR für einen aromatischen Rest,
R³ für H, eine unsubstituierte, lineare oder verzweigte C₁-C₅-Alkylkette, eine Hydroxygruppe, C₁-C₁₀-Alkoxygruppe oder Aryloxygruppe,
R⁴ für H oder einen Phenylring steht,
b. einem oder mehreren Monomeren der Formel (II) 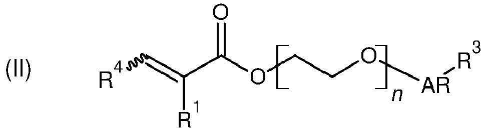
worin R¹ für ein Wasserstoffatom oder eine Methylgruppe,
AR für einen aromatischen Rest,
R³ für H, eine unsubstituierte, lineare oder verzweigte C₁-C₅-Alkylkette, eine Hydroxygruppe, C₁-C₁₀-Alkoxygruppe oder Aryloxygruppe, und
R⁴ für H oder einen Phenylring steht, und n = 0 bis 10 ist,
c. Styrol, und
d. Methlystyrol; und
(ii) 0 Gew.-% bis 85 Gew.-% eines oder mehrerer Comonomere,
wobei das Comonomer oder die Comonomere ausgewählt sind aus der Gruppe der (Meth)acrylat-Monomere und copolymerisierbaren Vinylmonomeren, und wobei das Comonomer oder die Comonomere nicht den Monomeren der Formel (I), den Monomeren der Formel (II), Styrol und Methylstyrol entsprechen, umfasst oder daraus besteht, wobei die Gewichtsanteile jeweils auf das Gesamtgewicht der Monomerzusammensetzung bezogen sind.

2. Reaktives Haftklebeband nach Anspruch 1, **dadurch gekennzeichnet, dass** das Poly(meth)acrylat auf eine Monomerzusammensetzung zurückzuführen ist, die
(i) 15 Gew.-% bis 100 Gew.-% eines oder mehrere Monomere ausgewählt aus der Gruppe bestehend aus
a. einem oder mehreren Monomeren der Formel (la) 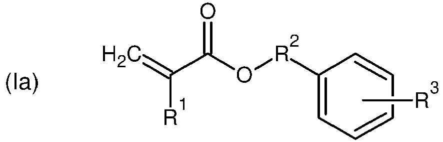
worin R¹ für ein Wasserstoffatom oder eine Methylgruppe,
R² für eine unsubstituierte, lineare oder verzweigte C₁-C₂₂-Alkylkette, und
R³ für H, eine unsubstituierte, lineare oder verzweigte C₁-C₅-Alkylkette, eine Hydroxygruppe, C₁-C₁₀-Alkoxygruppe oder Aryloxygruppe steht, und
b. einem oder mehreren Monomeren der Formel (Ila) 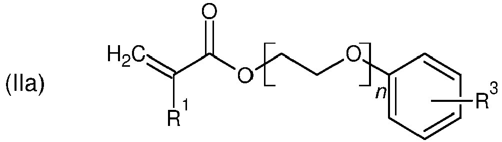
worin R¹ für ein Wasserstoffatom oder eine Methylgruppe,
R³ für H, eine unsubstituierte, lineare oder verzweigte C₁-C₅-Alkylkette, eine Hydroxygruppe, C₁-C₁₀-Alkoxygruppe oder Aryloxygruppe steht, und n = 0 bis 10 ist; und
(ii) 0 Gew.-% bis 85 Gew.-% eines oder mehrerer Comonomere,
wobei das Comonomer oder die Comonomere ausgewählt sind aus der Gruppe der (Meth)acrylat-Monomere, und
wobei das Comonomer oder die Comonomere nicht den Monomeren der Formel (la), den Monomeren der Formel (IIa), Styrol und Methylstyrol entsprechen, und wobei der T_{g} eines Homopolymers des jeweiligen Comonomeren größer als 0 °C, insbesondere größer als 10 °C ist,
umfasst oder daraus besteht, wobei die Gewichtsanteile jeweils auf das Gesamtgewicht der Monomerzusammensetzung bezogen sind.

3. Reaktives Haftklebeband nach Anspruch 1 oder Anspruch 2, wobei die Monomere (i) ausgewählt sind aus der Gruppe bestehend aus Benzylacrylat, Phenylacrylat, Benzylmethylacrylat, Phenylmethacrylat, 2-Phenoxyethylacrylat und 2-Phenoxyethylmethacrylat.

4. Reaktives Haftklebeband nach einem der Ansprüche 1 bis 3, **dadurch gekennzeichnet, dass** das Poly(meth)acrylat auf eine Monomerzusammensetzung zurückzuführen ist, die aus 55 Gew.-% bis 100 Gew.-% Monomere (i) und 0 Gew.-% bis 45 Gew.-% Comonomere (ii), bevorzugter aus 65 Gew.-% bis 100 Gew.-% Monomere (i) und 0 Gew.-% bis 35 Gew.-% Comonomere (ii) und besonders bevorzugt aus 80 Gew.-% bis 100 Gew.-% Monomere (i) und 0 Gew.-% bis 20 Gew.-% Comonomere (ii) besteht, wobei die Gewichtsanteile jeweils auf das Gesamtgewicht der Monomerzusammensetzung bezogen sind.

5. Reaktives Haftklebeband nach einem der Ansprüche 1 bis 4, **dadurch gekennzeichnet, dass** das Poly(meth)acrylat auf eine Monomerzusammensetzung zurückzuführen ist, die ein stickstoffhaltiges Comonomer (ii) umfasst.

6. Reaktives Haftklebeband nach einem der Ansprüche 1 bis 5, **dadurch gekennzeichnet, dass** die Basismasse der mindestens einen Reaktivklebemasse ein radikalisch polymerisierbares Oligomer umfasst.

7. Reaktives Haftklebeband nach einem der Ansprüche 1 bis 5, **dadurch gekennzeichnet, dass** das mindestens eine radikalisch polymerisierbare Monomer oder Oligomer einen Siedepunkt bei 1 mbar von mindestens 30 °C, bevorzugt mindestes 60 °C, und besonders bevorzugt von mindestens 80 °C aufweist, oder bei 23 °C als Feststoff vorliegt.

8. Reaktives Haftklebeband nach einem der Ansprüche 1 bis 7, **dadurch gekennzeichnet, dass** das mindestens eine radikalisch polymerisierbare Monomer oder Oligomer (b) ausgewählt ist aus der Gruppe bestehend aus Acrylsäureestern, Methacrylsäureestern, Vinylverbindungen, Verbindungen mit Kohlenstoff-Kohlenstoff-Doppelbindungen, und vernetzenden radikalisch polymerisierbaren Monomeren, wie Diacrylaten, Dimethacrylaten, Triacrylaten, Trimethacrylaten und höher funktionellen Acrylaten bzw. höher funktionellen Methacrylaten, bevorzugt 2-Phenoxyethylacrylat, 2-Phenoxyethylmethacrylat, 2-Hydroxy-3-phenoxy-propylacrylat, 2-Hydroxy-3-phenoxy-propylmethacrylat, 2-[2-(Methacryloyloxy)ethoxycarbonyl]benzoesäure, 2-[[(Phenylamino)-carbonyl]oxy]ethylmethacrylat, 2-Tert-butyl-6-[(3-tert-butyl-2-hydroxy-5-methylphenyl)methyl]-4-methylphenylprop-2-enoat, (5-Ethyl-1,3-dioxan-5-yl)methylacrylat, (2-Oxo-1,3-dioxolan-4-yl)methylmethacrylat, Di(ethylenglycol)-2-ethylhexyletheracrylat, (2,2-Dimethyl-1,3-dioxolan-4-yl)methylprop-2-enoat, Bernsteinsäure-mono-[2-(acryloyloxy)-ethylester], Bernsteinsäure-mono-[2-(methacryloyloxy)ethylester], (2,2-Pentamethylene-1,3-oxazolidyl-3)ethylmethacrylat, 2-Hydroxy-3-(prop-2-enoyloxy)propyl-2-methyl-2-propyl-hexanoat, 2-[[(Butylamino)carbonyl]oxy]ethylacrylat, Stearylacrylat, Stearylmethacrylat, Diurethandimethacrylat (Isomerenmischung), Bisphenol A-glycerolatdimethacrylat, Bisphenol A-dimethacrylat, Ethylenglykoldiacrylat, Ethylenglykoldimethacrylat, Trimethyloylpropanpropoxylat-triacrylat, Trimethyloylpropan-triacrylat und Di(trimethylolpropan)tetraacrylat.

9. Reaktives Haftklebeband nach einem der Ansprüche 1 bis 8, **dadurch gekennzeichnet, dass** die Basismasse der mindestens einen Reaktivklebemasse neben dem mindestens einen Poly(meth)acrylat (d) noch ein weiteres oder mehrere weitere Polymere umfasst.

10. Reaktives Haftklebeband nach Anspruch 9, **dadurch gekennzeichnet, dass** das weitere Polymer ausgewählt ist oder die weiteren Polymere (d) ausgewählt sind aus der Gruppe bestehend aus Polyurethan, Polyester bzw. Copolyester, Polyamid bzw. Copolyamid, Ethylen-Vinylacetat-Copolymer und Polyvinylcaprolactam.

11. Reaktives Haftklebeband nach Anspruch 10, **dadurch gekennzeichnet, dass** das weitere Polymer ein Polyurethan, insbesondere ein thermoplastisches Polyurethan, ist.

12. Reaktives Haftklebeband nach einem der Ansprüche 1 bis 11, **dadurch gekennzeichnet, dass** die mindestens eine Reaktivklebemasse
eine Basismasse enthält, die
(a) 10 Gew.-% bis 90 Gew.-%, bevorzugter 20 Gew.-% bis 60 Gew.-% und insbesondere bevorzugt 40 Gew.-% bis 55 Gew.-% mindestens eines Poly(meth)acrylats, und
(b) 10 Gew.-% bis 80 Gew.-%, bevorzugter 20 Gew.-% bis 60 Gew.-% und insbesondere bevorzugt 35 Gew.-% bis 45 Gew.-% mindestens eines radikalisch polymerisierbaren Monomers oder Oligomers, jeweils bezogen auf das Gesamtgewicht der Basismasse, enthält
und zudem
(c) 0,1 Gew.-% bis 10 Gew.-%, bevorzugter 0,1 Gew.-% bis 5 Gew.-%, und insbesondere bevorzugt 0,1 Gew.-% bis 2 Gew.-%, bezogen auf 100 Gew.-% der Basismasse, mindestens eines Initiatorsystems zur Aushärtung des mindestens einen radikalisch polymerisierbaren Monomers oder Oligomers umfasst.

13. Reaktives Haftklebeband nach Anspruch 12, **dadurch gekennzeichnet, dass** die Basismasse der mindestens einen Reaktivklebemasse
(d) 1 Gew.-% bis 50 Gew.-%, bevorzugter 1 Gew.-% bis 40 Gew.-%, eines weiteren oder mehrerer weiterer Polymere, jeweils bezogen auf das Gesamtgewicht der Basismasse der Reaktivklebemasse, umfasst.

14. Reaktives Haftklebeband nach einem der Ansprüche 1 bis 13, **dadurch gekennzeichnet, dass** das mindestens eine Initiatorsystem zur Aushärtung des mindestens einen radikalisch polymerisierbaren Monomers oder Oligomers aus mindestens einem Radikalinitiator (c1) und mindestens einem Photoredox-Katalysator (c2) besteht.

15. Reaktives Haftklebeband nach Anspruch 14, **dadurch gekennzeichnet, dass** der mindestens eine Radikalinitiator (c1) ein organisches Peroxid, bevorzugt ein Hydroperoxid und am stärksten bevorzugt Diisopropylbenzolhydroperoxid ist.

16. Reaktives Haftklebeband nach Anspruch 14 oder 15, **dadurch gekennzeichnet, dass** der mindestens eine Photoredox-Katalysator (c2) ausgewählt ist aus der Gruppe bestehend aus Ru(bpm)²⁺ Anion, Ru(bpz)₃²⁺ Anion, Ru(bpy)₃²⁺Anion, Ru(phen)₃²⁺ Anion, Ir[dF(CF₃)ppy]₂(dtbbpy)⁺ Anion, Ir(ppy)₃, Ir(ppy)₂(dtbbpy)⁺ Anion, Ir(Fppy)₃ oder *fac*-Ir(ppy)₃, Cu(dap)²⁺ Anion.

17. Reaktives Haftklebeband nach einem der Ansprüche 14 bis 16, **dadurch gekennzeichnet, dass** die mindestens eine Reaktivklebemasse den mindestens einen Radikalinitiator (c1) im Bereich von 0,1 Gew.-% bis 9 Gew.-%, bevorzugter von 0,1 Gew.-% bis 5 Gew.-% und besonders bevorzugt von 0,5 Gew.-% bis 2 Gew.-%, und den mindestens einen Photoredox-Katalysator (c2) im Bereich bis etwa 1,0 Gew.-%, bevorzugter im Bereich bis zu 0,5 Gew.-% und besonders bevorzugt im Bereich von etwa 0,01 Gew.-% bis 0,1 Gew.-% bezogen auf 100 Gew.-% der Basismasse, umfasst.
